# EUROPEAN PATENT APPLICATION

(11) **EP 4 686 145 A1**
(43) Date of publication of application: **28.01.2026**
(21) Application number: 23928863.2
(22) Date of filing: 21.07.2023
(51) Int. Cl.: H04L 9/30, H04L 9/06

(54) **SIGNAL PROCESSING APPARATUS AND DISPLAY APPARATUS EQUIPPED WITH SAME FOR VEHICLES**

(30) Priority: 23.03.2023 KR 20230038032
(71) Applicant: LG Electronics Inc., Yeongdeungpo-gu Seoul 07336 (KR)
(72) Inventor: JEONG, Daeyoung, Seoul 06772 (KR); KIM, Eunjin, Seoul 06772 (KR); YOON, Jaegu, Seoul 06772 (KR)
(74) Representative: Vossius & Partner Patentanwälte Rechtsanwälte mbB
(86) International application number: PCT/KR2023/010583
(87) International publication number: WO 2024/195939

(57) **Abstract**

A signal processing device and a vehicle display apparatus including the same are disclosed. The signal processing device according to an embodiment of the present disclosure includes a processor configured to perform signal processing for a display mounted in a vehicle, wherein the processor is configured to execute a server virtual machine and at least one guest virtual machine on a hypervisor in the processor, wherein the server virtual machine is configured to transmit a security key to a first guest virtual machine based on a first communication scheme or a second communication scheme different from the first communication scheme, and to transmit data encrypted based on the security key to the first guest virtual machine based on the second communication scheme. Accordingly, it is possible to increase security during data transmission.

## Description

### BACKGROUND

### 1. Field

The present disclosure relates to a signal processing device and a vehicle display apparatus including the same, and more particularly to a signal processing device capable of increasing security during data transmission, and a vehicle display apparatus including the same.

### 2. Description of the Related Art

A vehicle is an apparatus that a driver moves in a desired direction. A representative example of the vehicle is a car.

Meanwhile, a display apparatus for vehicles is mounted in the vehicle for convenience of users who use the vehicle.

For example, a display is disposed in a cluster in order to display various kinds of information. Meanwhile, in order to display vehicle driving information, various displays, such as an audio video navigation (AVN) display, are mounted in the vehicle, in addition to the cluster.

In the case in which the number of displays in the display apparatus for vehicles is increased, however, signal processing for the displays is complicated.

Particularly, signal processing for the displays in the signal processing device becomes complicated. Further, security has become an important issue in data transmission.

### SUMMARY

It is an object of the present disclosure to provide a signal processing device capable of increasing security during data transmission, and a vehicle display apparatus including the signal processing device.

Meanwhile, it is another object of the present disclosure to provide a signal processing device capable of increasing security during data transmission based on a plurality of virtual machines, and a vehicle display apparatus including the signal processing device.

Meanwhile, it is yet another object of the present disclosure to provide a signal processing device capable of increasing security when data is received from an external server, and a vehicle display apparatus including the signal processing device.

Meanwhile, it is further another object of the present disclosure to provide a signal processing device capable of increasing security during data transmission even though a plurality of virtual machines is driven by different operating systems, and a vehicle display apparatus including the signal processing device.

In accordance with an aspect of the present disclosure, the above and other objects can be accomplished by the provision of a signal processing device including a processor configured to perform signal processing for a display mounted in a vehicle, wherein the processor is configured to execute a server virtual machine and at least one guest virtual machine on a hypervisor in the processor, wherein the server virtual machine is configured to transmit a security key to a first guest virtual machine based on a first communication scheme or a second communication scheme different from the first communication scheme, and to transmit data encrypted based on the security key to the first guest virtual machine based on the second communication scheme.

Meanwhile, the first communication scheme can correspond to interface communication, and the second communication scheme can correspond to Scalable service-Oriented MiddlewarE over IP (SOME/IP) communication.

Meanwhile, the server virtual machine can be configured to transmit the security key to a plurality of guest virtual machines based on the first communication scheme or the second communication scheme, and to transmit the data encrypted based on the security key to the plurality of guest virtual machines based on the second communication scheme.

Meanwhile, the server virtual machine can be configured to transmit data associated with an executed first application to at least one guest virtual machine based on the first communication scheme, and to transmit data associated with an executed second application to at least one guest virtual machine based on the second communication scheme.

Meanwhile, the first guest virtual machine can be configured to output a first image corresponding to the data associated with the first application received based on the first communication scheme, and to output, on the first image, a second image corresponding to the data associated with the second application received based on the second communication scheme.

Meanwhile, the server virtual machine and the guest virtual machine can be configured to execute a routing manager for data transmission based on the second communication scheme.

Meanwhile, in response to receiving a request for authentication from the first guest virtual machine, the server virtual machine can be configured to encrypt the security key based on a public key received from the first guest virtual machine, and to transmit the encrypted security key to the first guest virtual machine based on the first communication scheme or the second communication scheme.

Meanwhile, in response to receiving a request for authentication from the first guest virtual machine and a certificate being valid, the server virtual machine can be configured to encrypt the security key based on a public key received from the first guest virtual machine, and to transmit the encrypted security key to the first guest virtual machine based on the first communication scheme or the second communication scheme.

Meanwhile, in response to receiving a request for authentication from the first guest virtual machine and a certificate being not valid, the server virtual machine can be configured to transmit a message, indicating that the certificate is not valid, to the first guest virtual machine based on the first communication scheme or the second communication scheme.

Meanwhile, the server virtual machine can be configured to receive location information data, camera data, or sensing data, and to transmit location information data, camera data, or sensing data which is encrypted based on the security key, to the first guest virtual machine based on the second communication scheme.

Meanwhile, the server virtual machine or the first guest virtual machine can be configured to execute a security interface in active mode and a security interface in standby mode.

Meanwhile, the security interface in the active mode can be connected to a security interface in active mode of another connected virtual machine or another connected signal processing device, and the security interface in the standby mode can be configured to monitor a queue status.

Meanwhile, while outputting an image in a first mode, the first guest virtual machine or the second guest virtual machine can be configured to output an image in a second mode in response to receiving mode change data.

Meanwhile, while outputting an image in a first mode, the first guest virtual machine or the second guest virtual machine can be configured to output an image in a second mode in response to receiving view change data, and to output an image in a third mode in response to receiving data having a level of importance greater than or equal to a predetermined value.

Meanwhile, a first guest virtual machine of the plurality of guest virtual machines can be configured to operate for a first display, and a second guest virtual machine of the plurality of guest virtual machines can be configured to operate for a second display.

The signal processing device can further include: a secured storage device configured to store a digital signature and a public key of an external server; and a security executor configured to receive the encrypted data from the server, to decrypt the encrypted data from the server based on the digital signature and the public key of the server, and to transmit the decrypted data to the server virtual machine or at least one of the plurality of guest virtual machines.

In accordance with another aspect of the present disclosure, there is provided a signal processing device including a processor configured to perform signal processing for a display mounted in a vehicle, wherein the processor is configured to execute a server virtual machine and at least one guest virtual machine on a hypervisor in the processor, wherein the server virtual machine is configured to transmit data associated with a first application to a first guest virtual machine based on a first communication scheme, wherein the first guest virtual machine is configured to output a first image corresponding to the data associated with the first application received based on the first communication scheme, and to output, on the first image, a second image corresponding to the data associated with the second application received based on the second communication scheme.

In accordance with yet another aspect of the present disclosure, there is provided a vehicle display apparatus including: a first display; a second display; and a signal processing device including a processor configured to perform signal processing for the first display and the second display, wherein the signal processing device includes a processor configured to perform signal processing for a display mounted in a vehicle, wherein the processor is configured to execute a server virtual machine and at least one guest virtual machine on a hypervisor in the processor, wherein the server virtual machine is configured to transmit a security key to a first guest virtual machine based on a first communication scheme or a second communication scheme different from the first communication scheme, and to transmit data encrypted based on the security key to the first guest virtual machine based on the second communication scheme.

In accordance with yet another aspect of the present disclosure, there is provided a vehicle display apparatus including: a first display; a second display; and a signal processing device including a processor configured to perform signal processing for the first display and the second display, wherein the signal processing device includes a processor configured to perform signal processing for a display mounted in a vehicle, wherein the processor is configured to execute a server virtual machine and at least one guest virtual machine on a hypervisor in the processor, wherein the server virtual machine is configured to transmit data associated with a first application to a first guest virtual machine based on a first communication scheme, wherein the first guest virtual machine is configured to output a first image corresponding to the data associated with the first application received based on the first communication scheme, and to output, on the first image, a second image corresponding to the data associated with the second application received based on the second communication scheme.

### EFFECTS OF THE DISCLOSURE

A signal processing device according to an embodiment of the present disclosure includes a processor configured to perform signal processing for a display mounted in a vehicle, wherein the processor is configured to execute a server virtual machine and at least one guest virtual machine on a hypervisor in the processor, wherein the server virtual machine is configured to transmit a security key to a first guest virtual machine based on a first communication scheme or a second communication scheme different from the first communication scheme, and to transmit data encrypted based on the security key to the first guest virtual machine based on the second communication scheme. Accordingly, it is possible to increase security during data transmission. Particularly, it is possible to increase security during data transmission based on a plurality of virtual machines. Further, it is possible to increase security during data transmission even though the plurality of virtual machines are driven by different operating systems.

Meanwhile, the first communication scheme can correspond to interface communication, and the second communication scheme can correspond to Scalable service-Oriented MiddlewarE over IP (SOME/IP) communication. Accordingly, it is possible to transmit data based on various communication schemes, and to increase security during data transmission. Particularly, it is possible to increase security during data transmission via SOME/IP communication.

Meanwhile, the server virtual machine can be configured to transmit the security key to a plurality of guest virtual machines based on the first communication scheme or the second communication scheme, and to transmit the data encrypted based on the security key to the plurality of guest virtual machines based on the second communication scheme. Accordingly, it is possible to increase security during data transmission.

Meanwhile, the server virtual machine can be configured to transmit data associated with an executed first application to at least one guest virtual machine based on the first communication scheme, and to transmit data associated with an executed second application to at least one guest virtual machine based on the second communication scheme. Accordingly, it is possible to increase security during data transmission.

Meanwhile, the first guest virtual machine can be configured to output a first image corresponding to the data associated with the first application received based on the first communication scheme, and to output, on the first image, a second image corresponding to the data associated with the second application received based on the second communication scheme. Accordingly, while increasing security during data transmission, the first and second images can be displayed in an overlapping manner by superimposing the second image on the first image.

Meanwhile, the server virtual machine and the guest virtual machine can be configured to execute a routing manager for data transmission based on the second communication scheme. Accordingly, it is possible to increase security during data transmission.

Meanwhile, in response to receiving a request for authentication from the first guest virtual machine, the server virtual machine can be configured to encrypt the security key based on a public key received from the first guest virtual machine, and to transmit the encrypted security key to the first guest virtual machine based on the first communication scheme or the second communication scheme. Accordingly, it is possible to increase security during data transmission.

Meanwhile, in response to receiving a request for authentication from the first guest virtual machine and a certificate being valid, the server virtual machine can be configured to encrypt the security key based on a public key received from the first guest virtual machine, and to transmit the encrypted security key to the first guest virtual machine based on the first communication scheme or the second communication scheme. Accordingly, it is possible to increase security during data transmission.

Meanwhile, in response to receiving a request for authentication from the first guest virtual machine and a certificate being not valid, the server virtual machine can be configured to transmit a message, indicating that the certificate is not valid, to the first guest virtual machine based on the first communication scheme or the second communication scheme. Accordingly, it is possible to increase security during data transmission.

Meanwhile, the server virtual machine can be configured to receive location information data, camera data, or sensing data, and to transmit location information data, camera data, or sensing data which is encrypted based on the security key, to the first guest virtual machine based on the second communication scheme. Accordingly, it is possible to increase security during transmission of the location information data, the camera data, or the sensing data.

Meanwhile, the server virtual machine or the first guest virtual machine can be configured to execute a security interface in active mode and a security interface in standby mode. Accordingly, it is possible to increase security during data transmission.

Meanwhile, the security interface in the active mode can be connected to a security interface in active mode of another connected virtual machine or another connected signal processing device, and the security interface in the standby mode can be configured to monitor a queue status. Accordingly, it is possible to increase security during data transmission.

Meanwhile, while outputting an image in a first mode, the first guest virtual machine or the second guest virtual machine can be configured to output an image in a second mode in response to receiving mode change data. Accordingly, an image corresponding to the mode change can be displayed.

Meanwhile, while outputting an image in a first mode, the first guest virtual machine or the second guest virtual machine can be configured to output an image in a second mode in response to receiving view change data, and to output an image in a third mode in response to receiving data having a level of importance greater than or equal to a predetermined value. Accordingly, an image corresponding to the mode change or the level of importance can be displayed.

Meanwhile, a first guest virtual machine of the plurality of guest virtual machines can be configured to operate for a first display, and a second guest virtual machine of the plurality of guest virtual machines can be configured to operate for a second display. Accordingly, the displays can be controlled for each virtual machine.

The signal processing device can further include: a secured storage device configured to store a digital signature and a public key of an external server; and a security executor configured to receive the encrypted data from the server, to decrypt the encrypted data from the server based on the digital signature and the public key of the server, and to transmit the decrypted data to the server virtual machine or at least one of the plurality of guest virtual machines. Accordingly, it is possible to increase security when data is received from the external server.

In accordance with another aspect of the present disclosure, there is provided a signal processing device including a processor configured to perform signal processing for a display mounted in a vehicle, wherein the processor is configured to execute a server virtual machine and at least one guest virtual machine on a hypervisor in the processor, wherein the server virtual machine is configured to transmit data associated with a first application to a first guest virtual machine based on a first communication scheme, wherein the first guest virtual machine is configured to output a first image corresponding to the data associated with the first application received based on the first communication scheme, and to output, on the first image, a second image corresponding to the data associated with the second application received based on the second communication scheme. Accordingly, while increasing security during data transmission, the first and second images can be displayed in an overlapping manner by superimposing the second image on the first image.

In accordance with yet another aspect of the present disclosure, there is provided a vehicle display apparatus including: a first display; a second display; and a signal processing device including a processor configured to perform signal processing for the first display and the second display, wherein the signal processing device includes a processor configured to perform signal processing for a display mounted in a vehicle, wherein the processor is configured to execute a server virtual machine and at least one guest virtual machine on a hypervisor in the processor, wherein the server virtual machine is configured to transmit a security key to a first guest virtual machine based on a first communication scheme or a second communication scheme different from the first communication scheme, and to transmit data encrypted based on the security key to the first guest virtual machine based on the second communication scheme. Accordingly, it is possible to increase security during data transmission. Particularly, it is possible to increase security during data transmission based on a plurality of virtual machines.

In accordance with yet another aspect of the present disclosure, there is provided a vehicle display apparatus including: a first display; a second display; and a signal processing device including a processor configured to perform signal processing for the first display and the second display, wherein the signal processing device includes a processor configured to perform signal processing for a display mounted in a vehicle, wherein the processor is configured to execute a server virtual machine and at least one guest virtual machine on a hypervisor in the processor, wherein the server virtual machine is configured to transmit data associated with a first application to a first guest virtual machine based on a first communication scheme, wherein the first guest virtual machine is configured to output a first image corresponding to the data associated with the first application received based on the first communication scheme, and to output, on the first image, a second image corresponding to the data associated with the second application received based on the second communication scheme. Accordingly, while increasing security during data transmission, the first and second images can be displayed in an overlapping manner by superimposing the second image on the first image.

### BRIEF DESCRIPTION OF THE DRAWINGS

FIG. 1A is a view showing an example of the exterior and interior of a vehicle;
FIG. 1B is a view showing another example of the interior of the vehicle;
FIG. 2 is a view showing the external appearance of a display apparatus for vehicles according to an embodiment of the present disclosure;
FIG. 3 illustrates an example of an internal block diagram of the display apparatus for vehicles of FIG. 2;
FIG. 4 is a view showing a system driven in a signal processing device related to the present disclosure;
FIG. 5 is a diagram illustrating an example of a system driven in a signal processing device according to an embodiment of the present disclosure;
FIG. 6 is a diagram referred to in the description of operation of a system driven in a signal processing device according to an embodiment of the present disclosure;
FIG. 7 is a diagram illustrating a system driven in a signal processing device according to an embodiment of the present disclosure; and
FIGS. 8A to 13B are diagrams referred to in the description of FIG. 7.

### DETAILED DESCRIPTION

Hereinafter, the present disclosure will be described in detail with reference to the accompanying drawings.

With respect to constituent elements used in the following description, suffixes "module" and "unit" are given only in consideration of ease in preparation of the specification, and do not have or serve different meanings. Accordingly, the suffixes "module" and "unit" can be used interchangeably.

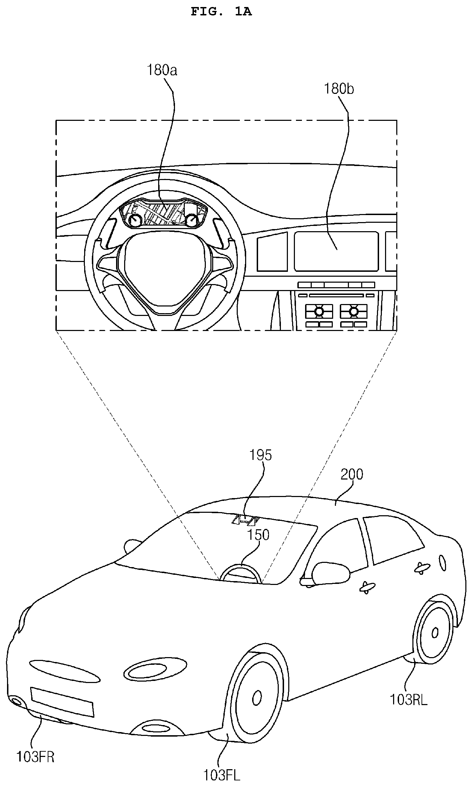

FIG. 1A is a view showing an example of the exterior and interior of a vehicle.

Referring to the figure, the vehicle 200 is moved by a plurality of wheels 103FR, 103FL, 103RL,... rotated by a power source and a steering wheel 150 configured to adjust an advancing direction of the vehicle 200.

Meanwhile, the vehicle 200 can be provided with a camera 195 configured to acquire an image of the front of the vehicle.

Meanwhile, the vehicle 200 can be further provided therein with a plurality of displays 180a and 180b configured to display images and information.

In FIG. 1A, a cluster display 180a and an audio video navigation (AVN) display 180b are illustrated as the plurality of displays 180a and 180b. In addition, a head up display (HUD) can also be used.

Meanwhile, the audio video navigation (AVN) display 180b can also be called a center information display.

Meanwhile, the vehicle 200 described in this specification can be a concept including all of a vehicle having an engine as a power source, a hybrid vehicle having an engine and an electric motor as a power source, and an electric vehicle having an electric motor as a power source.

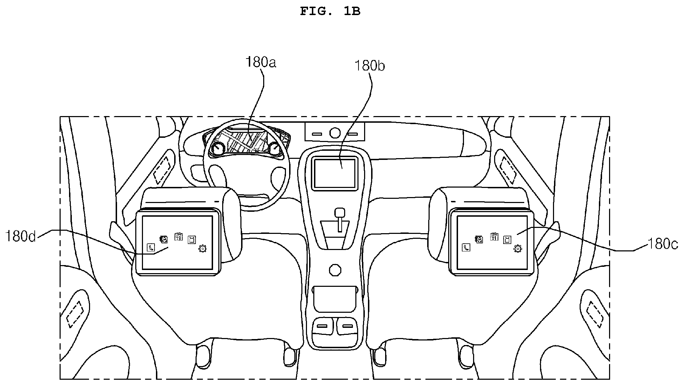

FIG. 1B is a view showing another example of the interior of the vehicle.

Referring to the figure, a cluster display 180a, an audio video navigation (AVN) display 180b, rear seat entertainment displays 180c and 180d, and a rear-view mirror display (not shown) can be mounted in the vehicle.

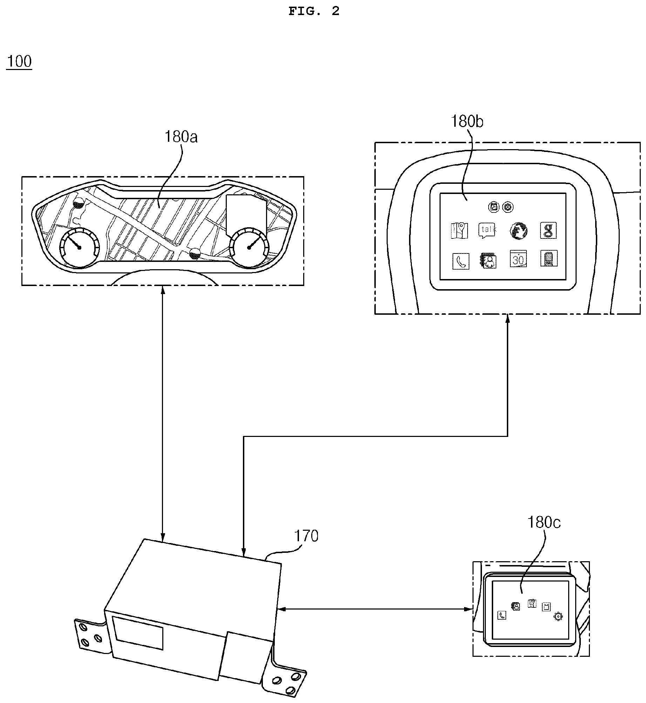

FIG. 2 is a view showing the external appearance of a display apparatus for vehicles according to an embodiment of the present disclosure.

A display apparatus 100 for vehicles (hereinafter referred to as a vehicle display apparatus) according to the embodiment of the present disclosure can include a plurality of displays 180a and 180b and a signal processing device 170 configured to perform signal processing in order to display images and information on the plurality of displays 180a and 180b.

The first display 180a, which is one of the plurality of displays 180a and 180b, can be a cluster display 180a configured to display a driving state and operation information, and the second display 180b can be an audio video navigation (AVN) display 180b configured to display vehicle driving information, a navigation map, various kinds of entertainment information, or an image.

The signal processing device 170 can include a processor 175 and can execute first to third virtual machines 520 to 540 on a hypervisor 505 in the processor 175.

The first virtual machine 520, which is a server virtual machine, can control a second virtual machine 530 and a third virtual machine 540 which are guest virtual machines.

Meanwhile, the second virtual machine can be referred to as a first guest virtual machine, and the third virtual machine can be referred to as a second guest virtual machine.

The first guest virtual machine 530 can operate for the first display 180a, and the second guest virtual machine 540 can operate for the second display 180b.

Meanwhile, the server virtual machine 520 in the processor 715 can be configured to set up the shared memory 508 based on the hypervisor 505 for transmission of identical data to the first guest virtual machine 530 and the second guest virtual machine 540. Accordingly, the first display 180a and the second display 180b in a vehicle can display identical information or identical images in a synchronized manner.

Meanwhile, the server virtual machine 520 in the processor 175 can receive and process wheel speed sensor data of the vehicle, and can transmit the processed wheel speed sensor data to at least one of the first guest virtual machine 530 or the second guest virtual machine 540. Accordingly, at least one virtual machine can share the wheel speed sensor data of the vehicle.

Meanwhile, the vehicle display apparatus 100 according to the embodiment of the present disclosure can further include a rear seat entertainment (RSE) display 180c configured to display driving state information, simple navigation information, various kinds of entertainment information, or an image.

The signal processing device 170 can further execute a third virtual machine (not shown), in addition to the server virtual machine 520 and the plurality of guest virtual machines 530 and 540, on the hypervisor 505 in the processor 175 to control the RSE display 180c.

Consequently, it is possible to control various displays 180a to 180c using a single signal processing device 170.

Meanwhile, some of the plurality of displays 180a to 180c can be operated based on a Linux Operating System (OS), and others can be operated based on a Web Operating System (OS).

The signal processing device 170 according to the embodiment of the present disclosure can be configured to operate displays 180a to 180c under various operating systems also display identical information or identical images in a synchronized state.

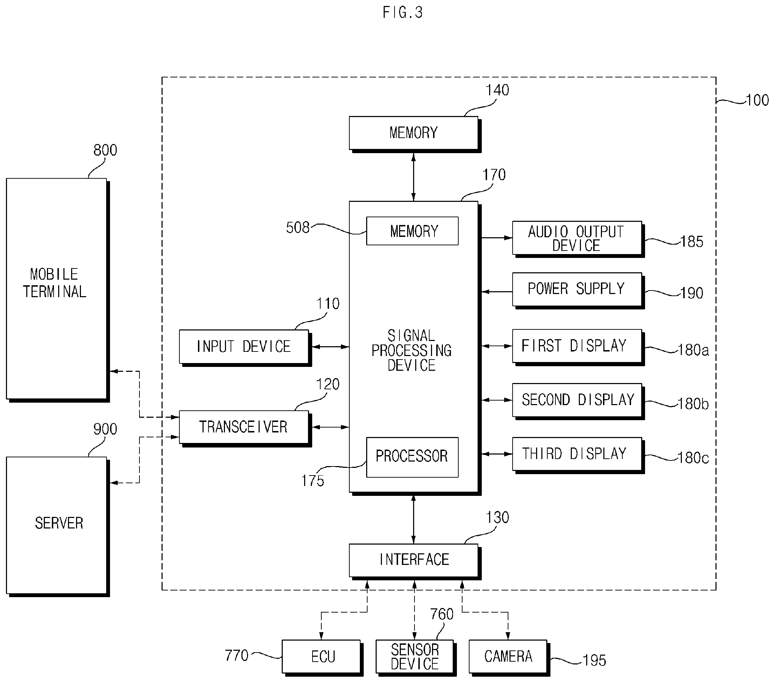

FIG. 3 illustrates an example of an internal block diagram of the display apparatus for vehicles according to the embodiment of the present disclosure.

Referring to the figure, the display apparatus 100 for vehicles according to the embodiment of the present disclosure can include an input device 110, a transceiver 120, an interface 130, a memory 140, a signal processing device 170, a plurality of displays 180a to 180c, an audio output device 185, and a power supply 190.

The input device 110 can include a physical button or pad for button input or touch input.

Meanwhile, the input device 110 can include a microphone (not shown) for user voice input.

The transceiver 120 can wirelessly exchange data with a mobile terminal 800 or a server 900.

In particular, the transceiver 120 can wirelessly exchange data with a mobile terminal of a vehicle driver. Any of various data communication schemes, such as Bluetooth, Wi-Fi, WIFI Direct, and APIX, can be used as a wireless data communication scheme.

The transceiver 120 can receive weather information and road traffic situation information, such as transport protocol expert group (TPEG) information, from the mobile terminal 800 or the server 900. To this end, the transceiver 120 can include a mobile communication module (not shown).

The interface 130 can receive sensor information from an electronic control unit (ECU) 770 or a sensor device 750, and can transmit the received information to the signal processing device 170.

Here, the sensor information can include at least one of vehicle direction information, vehicle position information (global positioning system (GPS) information), vehicle angle information, vehicle velocity information, vehicle acceleration information, vehicle inclination information, vehicle forward/backward movement information, battery information, fuel information, tire information, vehicle lamp information, in-vehicle temperature information, or in-vehicle humidity information.

The sensor information can be acquired from a heading sensor, a yaw sensor, a gyro sensor, a position sensor, a vehicle forward/backward movement sensor, a wheel sensor, a vehicle velocity sensor, a car body inclination sensor, a battery sensor, a fuel sensor, a tire sensor, a steering-wheel-rotation-based steering sensor, an in-vehicle temperature sensor, or an in-vehicle humidity sensor. Meanwhile, the position module can include a GPS module configured to receive GPS information.

Meanwhile, the interface 130 can receive front-of-vehicle image data, side-of-vehicle image data, rear-of-vehicle image data, and obstacle-around-vehicle distance information from a camera 195 or lidar (not shown), and can transmit the received information to the signal processing device 170.

The memory 140 can store various data necessary for overall operation of the display apparatus 100 for vehicles, such as programs for processing or control of the signal processing device 170.

For example, the memory 140 can store data about the hypervisor, the server virtual machine 520, and the plurality of guest virtual machines which are to be executed in the processor 175.

The audio output device 185 can convert an electrical signal from the signal processing device 170 into an audio signal, and can output the audio signal. To this end, the audio output device 185 can include a speaker and the like.

The power supply 190 can supply power necessary to operate components under control of the signal processing device 170. In particular, the power supply 190 can receive power from a battery in the vehicle.

The signal processing device 170 can control the overall operation of each unit in the vehicle display apparatus 100.

For example, the signal processing device 170 can include the shared memory 508 and the processor 175 configured to perform signal processing for the displays 180a and 180b.

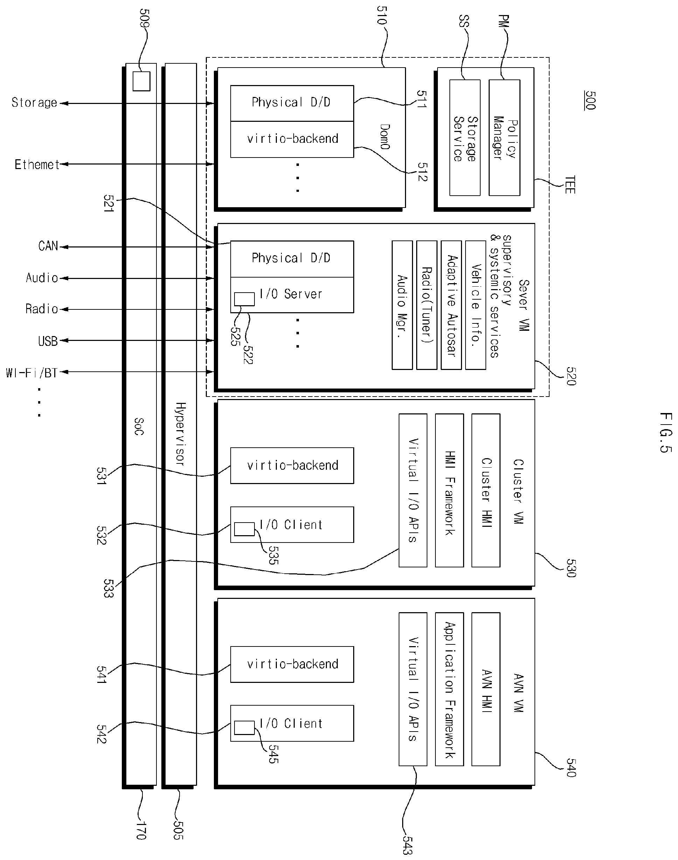

The processor 175 can execute the hypervisor 505 (see FIG. 5), and can execute the server virtual machine 520 and the plurality of guest virtual machines 530 and 540 on the hypervisor 505 that runs (see FIG. 5).

In this case, the first guest virtual machine 530 can operate for the first display 180a, and the second guest virtual machine 540 can operate for the second display 180b.

For example, the server virtual machine 520 in the processor 715 can receive, process, and output vehicle sensor data, position information data, camera image data, audio data, or touch input data. Data processing can be efficiently performed by separating data processed only by a legacy virtual machine and data processed by the server virtual machine 520. In particular, the server virtual machine 520 can process most of the data, thereby allowing **1:N** data sharing.

In another example, the server virtual machine 520 can directly receive and process CAN communication data, audio data, radio data, USB data, and wireless communication data for the first and second guest virtual machines 530 and 540.

Further, the server virtual machine 520 can transmit the processed data to the first and second guest virtual machines 530 and 540.

Accordingly, among the server virtual machine 520 and the plurality of guest virtual machines 530 and 540, only the server virtual machine 520 can receive communication data and external input data and can perform signal processing, whereby load in signal processing by the other virtual machines can be reduced and 1:N data communication can be achieved, and therefore synchronization at the time of data sharing can be achieved.

Meanwhile, the server virtual machine 520 can be configured to write data in the shared memory 508, whereby the first guest virtual machine 530 and the second guest virtual machine 540 share identical data.

For example, the server virtual machine 520 can be configured to write vehicle sensor data, the position information data, the camera image data, or the touch input data in the shared memory 508, whereby the first guest virtual machine 530 and the second guest virtual machine 540 share identical data. Accordingly, 1:N data sharing can be achieved.

As a result, the server virtual machine 520 can process most of the data, thereby allowing 1:N data sharing.

Meanwhile, the server virtual machine 520 in the processor 175 can be configured to set up the shared memory 508 based on the hypervisor 505 for transmission of identical data to the first guest virtual machine 530 and the second guest virtual machine 540.

That is, the server virtual machine 520 in the processor 175 can transmit identical data to the first guest virtual machine 530 and the second guest virtual machine 540 in a synchronized manner based on the shared memory 508 based on the hypervisor 505. Accordingly, the plurality of displays 180a and 180b in the vehicle can display identical images in a synchronized manner.

Meanwhile, the signal processing device 170 can process various signals, such as an audio signal, an image signal, and a data signal. To this end, the signal processing device 170 can be implemented in the form of a system on chip (SOC).

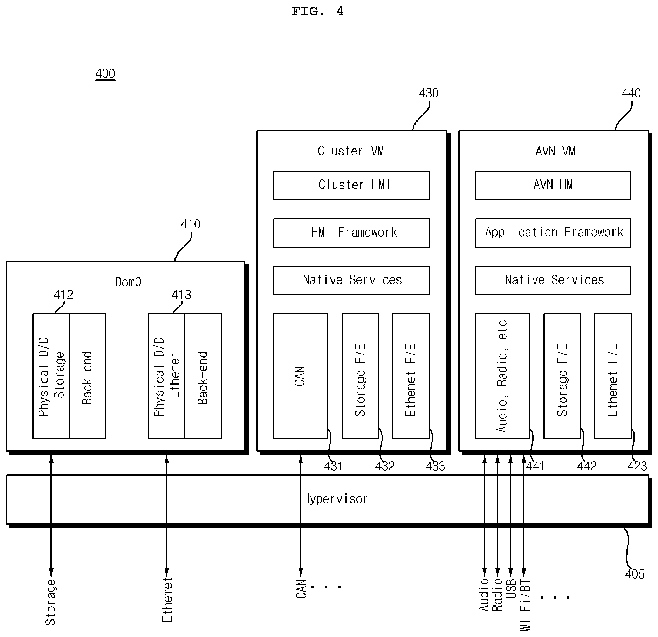

FIG. 4 is a view showing a system driven in a signal processing device related to the present disclosure.

Referring to the figure, FIG. 4 is a view illustrating that virtual machines are used for the cluster display 180a and the AVN display 180b.

The system 400 driven in the signal processing device of FIG. 4 illustrates that a cluster virtual machine 430 and an AVN virtual machine 440 are executed through a hypervisor 405 in the processor 175.

Meanwhile, the system 400 driven in the signal processing device of FIG. 4 illustrates that a legacy virtual machine 410 is also executed on the hypervisor 405 in the processor 175.

The legacy virtual machine 410 can include an interface 412 for data communication with the memory 140 and an interface 413 for Ethernet communication.

Meanwhile, the cluster virtual machine 430 can include an interface 431 for CAN communication, an interface 432 for communication with the interface 412 of the legacy virtual machine 410, and an interface 433 for communication with the interface 413 of the legacy virtual machine 410.

Meanwhile, the AVN virtual machine 440 can include an interface 441 for input and output of audio data, radio data, USB data, and wireless communication data, an interface 442 for communication with the interface 412 of the legacy virtual machine 410, and an interface 443 for communication with the interface 413 of the legacy virtual machine 410.

In the system 400, there is a disadvantage in that CAN communication data are input and output only in the cluster virtual machine 430, whereby the CAN communication data cannot be utilized in the AVN virtual machine 440.

Also, in the system 400 of FIG. **4****,** there is a disadvantage in that audio data, radio data, USB data, and wireless communication data are input and output only in the AVN virtual machine 440, whereby these data cannot be utilized in the cluster virtual machine 430.

Meanwhile, there is a drawback in that the cluster virtual machine 430 and the AVN virtual machine 440 are required to include the interfaces 431 and 432 and the interfaces 441 and 442, respectively, for memory data and Ethernet communication data input and output in the legacy virtual machine 410.

Therefore, the present disclosure proposes a scheme for improving the system of FIG. 4. That is, unlike FIG. 4, virtual machines are divided into the server virtual machine 520 and the guest virtual machines such that various memory data, communication data, and the like are input and output in the server virtual machine 520, instead of the guest virtual machines, which will be described below with reference to FIG. 5 and subsequent figures.

FIG. 5 is a diagram illustrating an example of a system driven in a signal processing device according to an embodiment of the present disclosure.

Referring to the figure, a system 500 of FIG. 5 is illustrated in which the server virtual machine 520, which is a server virtual machine, and the first guest virtual machine 530 and the second guest virtual machine 540, which are guest virtual machines, are executed on the hypervisor 505 in the processor 175 of the signal processing device 170.

The first guest virtual machine 530 can be a virtual machine for the cluster display 180a, and the second guest virtual machine 540 can be a virtual machine for the AVN display 180b.

That is, the first guest virtual machine 530 and the second guest virtual machine 540 can be operated for image rendering of the cluster display 180a and the AVN display 180b, respectively.

Meanwhile, it is also illustrated that in the system 500 running on the signal processing device 170 of FIG. 5, a legacy virtual machine 510 is also executed on the hypervisor 505 in the processor 175.

The legacy virtual machine 510 can include an interface 511 for data communication and Ethernet communication with the memory 140.

Meanwhile, the legacy virtual machine 510 can further include a virtio-backend interface 512 for data communication with the first and second guest virtual machines 530 and 540.

The server virtual machine 520 can include an interface 521 for input and output of audio data, radio data, USB data, and wireless communication data, and an input and output server interface 522 for data communication with the guest virtual machines.

That is, the server virtual machine 520, which is a server virtual machine, can provide inputs/outputs (I/O) difficult to virtualize with standard virtualization technology (VirtIO) to a plurality of guest virtual machines, e.g., the first and second guest virtual machines 530 and 540.

Meanwhile, the server virtual machine 520, which is a server virtual machine, can control radio data and audio data at a supervisor level, and can provide the data to a plurality of guest virtual machines, e.g., the first and second guest virtual machines 530 and 540, and the like.

Meanwhile, the server virtual machine 520, which is a server virtual machine, can process vehicle data, sensor data, and surroundings-of-vehicle information, and can provide the processed data or information to a plurality of guest virtual machines, e.g., the first and second guest virtual machines 530 and 540, and the like.

Meanwhile, the server virtual machine 520 can provide supervisory services, such as processing of vehicle data and audio routing management, and the like.

Next, the first guest virtual machine 530 can include an input and output client interface 532 for data communication with the server virtual machine 520 and APIs 533 configured to control the input and output client interface 532.

In addition, the first guest virtual machine 530 can include a virtio-backend interface for data communication with the legacy virtual machine 510.

The first guest virtual machine 530 can receive memory data by communication with the memory 140 and Ethernet data by Ethernet communication from the virtio-backend interface 512 of the legacy virtual machine 510 through the virtio-backend interface.

Next, the second guest virtual machine 540 can include an input and output client interface 542 for data communication with the server virtual machine 520 and APIs 543 configured to control the input and output client interface 542.

In addition, the second guest virtual machine 540 can include a virtio-backend interface for data communication with the legacy virtual machine 510.

The second guest virtual machine 540 can receive memory data by communication with the memory 140 and Ethernet data by Ethernet communication from the virtio-backend interface 512 of the legacy virtual machine 510 through the virtio-backend interface.

Meanwhile, unlike FIG. 5, the legacy virtual machine 510 can be provided in the server virtual machine 520.

In the system 500, CAN communication data, such as sensing data, are input and output only in the server virtual machine 520, but can be provided to a plurality of guest virtual machines, e.g., the first and second guest virtual machines 530 and 540, etc., through data processing in the server virtual machine 520. Accordingly, 1:N data communication by processing of the server virtual machine 520 can be achieved.

Also, in the system 500 of FIG. 5, audio data, radio data, USB data, and wireless communication data are input and output only in the server virtual machine 520, but can be provided to a plurality of guest virtual machines, e.g., the first and second guest virtual machines 530 and 540, etc., through data processing in the server virtual machine 520. Accordingly, 1:N data communication by processing of the server virtual machine 520 can be achieved.

Meanwhile, in the system 500 of FIG. 5, the first and second guest virtual machines 530 and 540 can operate on different operating systems.

For example, the first guest virtual machine 540 can operate on Linux OS, and the second guest virtual machine 540 can operate on a Web-based OS.

In the server virtual machine 520, the shared memory 508 based on the hypervisor 505 is set up for data sharing even when the first and second guest virtual machines 530 and 540 operate on different operating systems. Accordingly, even when the first and second guest virtual machines 530 and 540 operate on different operating systems, identical data or identical images can be shared in a synchronized manner. As a result, the plurality of displays 180a and 180b can display identical data or identical images in a synchronized manner.

Meanwhile, in addition to the processor 175, the signal processing device 170 can further include a secured storage device 509 configured to store an electronic or digital signature and a public key of an external server 900.

Meanwhile, the signal processing device 170 can further include a security executor TEE configured to receive encrypted data from the server 900, to decrypt the encrypted data from the server 900 based on the digital signature and the public key of the server 900, and to transmit the decrypted data to the server virtual machine 520 or at least one of the plurality of guest virtual machines 530 or 540.

Meanwhile, as illustrated in the drawing, the security executor TEE can also be executed by the processor 175 in the signal processing device 170.

The security executor TEE can include a policy manager PM configured to set data so that data, shared with the first guest virtual machine 530 and the second guest virtual machine 540, can vary depending on a sharing policy, and an interface SS configured to exchange data with the secured storage device 509.

Meanwhile, the server virtual machine 520 and the plurality of guest virtual machines 530 and 540 can include security interfaces 525, 535, and 545, respectively, which are configured to decrypt the received encrypted data or to transmit the encrypted data.

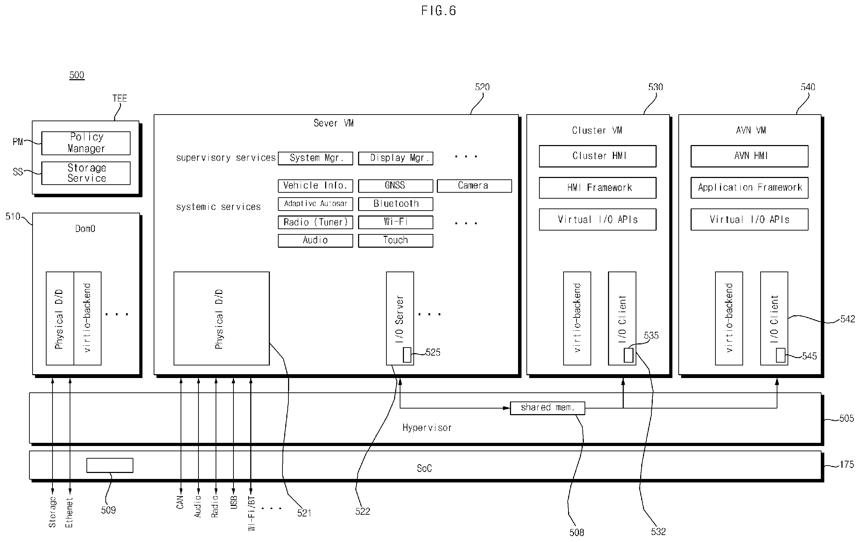

FIG. 6 is a diagram referred to in the description of operation of a system driven in a signal processing device according to an embodiment of the present disclosure.

In the system 500 of FIG. 6, the processor 175 in the signal processing device 170 executes the server virtual machine 520 and the plurality of guest virtual machines 530 and 540 on the hypervisor 505 in the processor 175, and the server virtual machine 520 in the processor 175 can be configured to transmit data to the first guest virtual machine 530 and the second guest virtual machine 540.

For example, as an example of identical data, identical image data can be transmitted from the server virtual machine 520 to the first guest virtual machine 530 and the second guest virtual machine 540. Accordingly, the plurality of displays 180a and 180b in the vehicle can display identical images in a synchronized manner.

Meanwhile, in the system 500 of FIG. 6, the processor 175 in the signal processing device 170 executes the server virtual machine 520 and the plurality of guest virtual machines 530 and 540 on the hypervisor 505 in the processor 175, and the server virtual machine 520 in the processor 175 can transmit identical data to the first guest virtual machine 530 and the second guest virtual machine 540 in a synchronized manner.

For example, examples of identical data can include CAN communication data, audio data, radio data, USB data, wireless communication data, position information data, or touch data, and the like. Accordingly, the plurality of displays 180a and 180b in the vehicle can display identical data in a synchronized manner.

Meanwhile, the server virtual machine 520 in the processor 175 can receive and process position information data that changes according to movement, and can provide the processed data to the first guest virtual machine 530 or the second guest virtual machine 540. Accordingly, instead of 1:1 data communication, 1:N data communication between the virtual machines can be achieved based on the shared memory.

Meanwhile, the first guest virtual machine 530 and the second guest virtual machine 540 can be driven by different operating systems. Accordingly, even when the plurality of virtual machines are driven by different operating systems, high-speed data communication can be performed.

Meanwhile, although not illustrated in FIG. 6, the legacy virtual machine 510 can transmit memory data from the memory 140 and Ethernet data by Ethernet communication to the first guest virtual machine 530 and the second guest virtual machines 540 in a synchronized manner. That is, 1:N data communication of the memory data or the Ethernet data can be performed. Accordingly, identical data can be transmitted in a synchronized manner.

Meanwhile, the server virtual machine 520 in the processor 175 can execute supervisory services, such as a system manager, a display manager, and the like.

Meanwhile, the server virtual machine 520 in the processor 175 can execute systemic services, such as vehicle information service, location information service, camera service, AUTOSAR, Bluetooth communication service, radio service, Wi-Fi service, audio service, touch service, and the like.

Meanwhile, similarly to FIG. 5, the signal processing device 170 can further include the secured storage device 509 configured to store a digital signature and a public key of the external server 900, in addition to the processor 175.

Meanwhile, the signal processing device 170 can further include a security executor TEE configured to receive encrypted data from the server 900, to decrypt the encrypted data from the server 900 based on the digital signature and the public key of the server 900, and to transmit the decrypted data to at least one of the plurality of guest virtual machines 530 or 540.

Meanwhile, as illustrated in the drawing, the security executor TEE can also be executed by the processor 175 in the signal processing device 170.

The security executor TEE can include a policy manager PM configured to set data so that data, shared with the first guest virtual machine 530 and the second guest virtual machine 540, can vary depending on a sharing policy, and an interface SS configured to exchange data with the secured storage device 509.

Meanwhile, the server virtual machine 520 and the first and second guest virtual machines 530 and 540 can include security interfaces 525, 535, and 545, respectively, which are configured to decrypt the received encrypted data or to transmit the encrypted data.

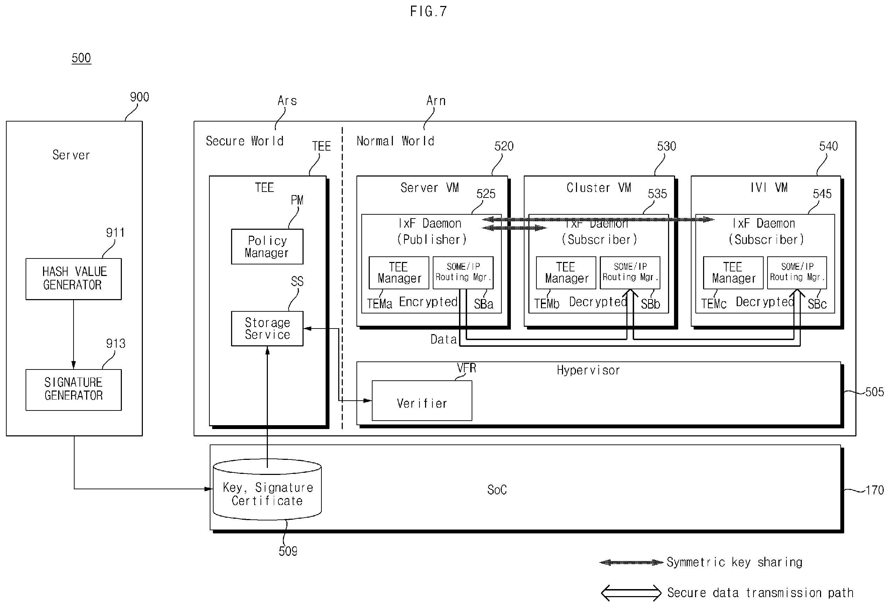

FIG. 7 is a diagram illustrating a system driven in a signal processing device according to an embodiment of the present disclosure.

Referring to the figure, a signal processing device 170 according to an embodiment of the present disclosure includes a processor 175 configured to perform signal processing for a display mounted in a vehicle.

Meanwhile, the processor 175 executes a server virtual machine 520 and a plurality of guest virtual machines 530 and 540 on a hypervisor 505 in the processor 175.

A first guest virtual machine 530 of the plurality of guest virtual machines 530 and 540 can operate for a first display 180a, and a second guest virtual machine 540 of the plurality of guest virtual machines 530 and 540 can operate for a second display 180b.

Meanwhile, the server virtual machine 520 according to an embodiment of the present disclosure is configured to transmit a security key to the first guest virtual machine 530 based on a first communication scheme or a second communication scheme different from the first communication scheme, and to transmit data encrypted based on the security key to the first guest virtual machine 530 based on the second communication scheme. Accordingly, it is possible to increase security during data transmission. Particularly, it is possible to increase security during data transmission based on the plurality of virtual machines. Further, it is possible to increase security during data transmission even though the plurality of virtual machines are driven by different operating systems.

Meanwhile, the first communication scheme can correspond to interface communication, and the second communication scheme can correspond to Scalable service-Oriented MiddlewarE over IP (SOME/IP) communication. Accordingly, it is possible to transmit data based on various communication schemes, and to increase security during data transmission. Particularly, it is possible to increase security during data transmission via SOME/IP communication.

Meanwhile, the server virtual machine 520 can be configured to transmit the security key to the plurality of guest virtual machines 530 and 540 based on the first communication scheme or the second communication scheme, and to transmit data encrypted based on the security key to the plurality of guest virtual machines 530 and 540 based on the second communication scheme. Accordingly, it is possible to increase security during data transmission.

Meanwhile, the server virtual machine 520 can be configured to transmit the security key to the plurality of guest virtual machines 530 and 540 based on the first communication scheme or the second communication scheme, and to transmit data encrypted based on the security key to the plurality of guest virtual machines 530 and 540 based on the second communication scheme. Accordingly, it is possible to increase security during data transmission.

Meanwhile, the server virtual machine 520 and the guest virtual machines 530 and 540 can execute routing managers SBa, SBb, and SBc, respectively, for data transmission based on the second communication scheme. Accordingly, it is possible to increase security during data transmission.

Meanwhile, the server virtual machine 520 and the guest virtual machines 530 and 540 can execute security interfaces 525, 535, and 545, respectively, for decrypting the received encrypted data or transmitting the encrypted data.

Meanwhile, the security interfaces 525, 535, and 545 can be referred to as interface daemons.

Meanwhile, the respective security interfaces 525, 535, and 545 can execute security managers TEma, TEmb, and TEmc for data exchange with the security executor TEE, and routing managers SBa, SBb, and SBc for transmitting and receiving the encrypted data based on the second communication scheme.

In this case, the routing managers SBa, SBb, and SBc can be SOME/IP routing managers and can perform communication based on UDP or TCP.

A SOME/IP communication scheme can be vulnerable to security threats. Accordingly, the present disclosure discloses encrypting data using a security key during data transmission via SOME/IP communication.

Accordingly, the routing managers SBa, SBb, and SBc can transmit or receive encrypted data including a header and payload. Accordingly, it is possible to increase security during data transmission. Particularly, it is possible to increase security during data transmission via SOME/IP communication.

Meanwhile, even though the first and second guest virtual machines 530 and 540 operate on different operating systems, the server virtual machine 520 can transmit or receive data encrypted using the security key. Accordingly, it is possible to increase security during data transmission even though the first and second guest virtual machines 530 and 540 operate on different operating systems.

Meanwhile, the server virtual machine 520 can transmit data associated with an executed first application to at least one guest virtual machine 530 or 540 based on the first communication scheme, and transmit data associated with an executed second application to at least one guest virtual machine 530 or 540 based on the second communication scheme. Accordingly, it is possible to increase security during data transmission.

Meanwhile, the first guest virtual machine 530 can output a first image corresponding to the data associated with the first application received based on the first communication scheme, and can output, on the first image, a second image corresponding to the data associated with the second application received based on the second communication scheme. Accordingly, while increasing security during data transmission, the first and second images can be displayed in an overlapping manner by superimposing the second image on the first image.

Meanwhile, the server virtual machine 520 can receive location information data, camera data, or sensing data, and can transmit location information data, camera data, or sensing data, which is encrypted based on the security key, to the first guest virtual machine 530 based on the second communication scheme. Accordingly, it is possible to increase security during transmission of the location information data, the camera data, or the sensing data.

In the drawing, an example is illustrated in which the server virtual machine 520 transmits a security key, including an encrypted symmetric key, to the first guest virtual machine 530 and the second guest virtual machine 540 based on the first communication scheme.

Accordingly, the first guest virtual machine 530 and the second guest virtual machine 540 can receive the encrypted symmetric key and can decrypt, based on the symmetric key, the encrypted data received based on the second communication scheme.

Meanwhile, the security key can be updated.

For example, the server virtual machine 520 can update the security key when a vehicle is started.

Alternatively, the server virtual machine 520 can update the security key during vehicle driving.

Alternatively, the server virtual machine 520 can update the security key in response to a received message count reaching a predetermined number.

Meanwhile, the server virtual machine 520 can transmit the security key including the encrypted symmetric key to at least one of the first guest virtual machine 530 or the second guest virtual machine 540 at a first time, and can transmit the security key, including the encrypted and updated symmetric key, to at least one of the first guest virtual machine 530 or the second guest virtual machine 540 at a second time after the first time. Accordingly, it is possible to increase security during data transmission based on the updated security key.

For example, the server virtual machine 520 can generate and update new symmetric keys as random key values at predetermined intervals.

Further, the server virtual machine 520 can transmit the security key, including the updated symmetric key, to the security interface 535 or 545 in at least one of the first guest virtual machine 530 or the second guest virtual machine 540. Accordingly, it is possible to increase security during data transmission based on the updated security key.

Meanwhile, in order to transmit identical data to the first guest virtual machine 530 and the second guest virtual machine 540, the server virtual machine 520 can be configured to transmit the security key to the first guest virtual machine 530 or the second guest virtual machine 540 based on the first communication scheme, and to transmit data encrypted based on the security key based on the second communication scheme. Accordingly, while transmitting the identical data, security can increase during transmission of the identical data.

Meanwhile, the first guest virtual machine 530 and the second guest virtual machine 540 can decrypt the received encrypted data based on the security key. Accordingly, it is possible to increase security during data transmission.

Meanwhile, the server 900 according to an embodiment of the present disclosure can include a hash value generator 911 and a digital signature generator 913.

The hash value generator 911 can generate hash value of binaries of the security interfaces 525, 535, and 545 in the respective virtual machines 520, 530, and 540, and the digital signature generator 913 can generate digital signature based on the generated hash value.

Meanwhile, the signal processing device 170 according to an embodiment of the present disclosure can further include the secured storage device 509 configured to store a digital signature and a public key of the external server 900.

Meanwhile, the signal processing device 170 according to an embodiment of the present disclosure can execute the security executor TEE configured to receive encrypted data form the server 900, to decrypt the encrypted data from the server 900 based on the digital signature and the public key of the server 900, and to transmit the decrypted data to the server virtual machine 520 or at least one of the plurality of guest virtual machines 530 or 540.

Meanwhile, the signal processing device 170 can further include a hardware-based security executor TEE.

Specifically, the signal processing device 170 according to an embodiment of the present disclosure can further include a security executor TEE configured to receive encrypted data form the external server 900, to decrypt the encrypted data from the server 900 based on the digital signature and the public key of the server 900, and to transmit the decrypted data to the server virtual machine 520 or at least one of the plurality of guest virtual machines 530 or 540.

Accordingly, while increasing security when data is received from the external server 900, data can be transmitted to internal virtual machines.

Meanwhile, the security executor TEE can include a policy manager PM configured to set data so that data, shared with the first guest virtual machine 530 and the second guest virtual machine 540, can vary depending on a sharing policy, and an interface SS for data exchange with the secured storage device 509.

Meanwhile, among the server virtual machine 520, the first guest virtual machine 530, and the second guest virtual machine 540, only the server virtual machine 520 can receive external input data and communication data. Accordingly, interface for the external input data and the communication data can be implemented efficiently.

In this case, the server virtual machine 520 can share the external input data or the communication data with at least one of the first guest virtual machine 530 or the second guest virtual machine 540.

To this end, the server virtual machine 520 can encrypt the external input data or the communication data and transmit the encrypted external input data or communication data to at least one of the first guest virtual machine 530 or the second guest virtual machine 540 based on the second communication scheme.

In response thereto, at least one of the first guest virtual machine 530 or the second guest virtual machine 540 can decrypt the external input data or communication data, received based on the second communication scheme, based on the security key received based on the first communication scheme. Accordingly, an interface for the external input data and the communication data can be implemented efficiently.

Meanwhile, the server virtual machine 520 can execute a verifier VFR executed in the hypervisor 505.

Meanwhile, the verifier VFR can verify integrity of the server virtual machine 520 and the plurality of guest virtual machines 530 and 540.

Specifically, the verifier VFR executed in the hypervisor 505 can receive digital signature and hash value of the respective security interfaces 525, 535, and 545 in the server virtual machine 520 and the plurality of guest virtual machines 530 and 540, and a public value of the external server 900, can calculate hash value based on the public key of the server 90 and the digital signature of the respective security interfaces 525, 535, and 545, and can verify integrity of the server virtual machine 520 and the plurality of guest virtual machines 530 and 540 by comparing the calculated hash value with the received hash value. Accordingly, it is possible to increase security during data transmission to virtual machines whose integrity is verified.

For example, in response to the integrity of the server virtual machine 520 and the first guest virtual machine 530 being verified by the verifier VFR executed in the hypervisor 505, the server virtual machine 520 can determine that the server virtual machine 520 and the first guest virtual machine 530 are valid virtual machines.

Meanwhile, in response to the integrity of the second guest virtual machine 540 not being verified by the verifier VFR, the server virtual machine 520 can determine that the second guest virtual machine 530 is not a valid virtual machine.

Further, the server virtual machine 520 can transmit a security key to the first guest virtual machine 530 based on the first communication scheme, without transmitting the security key to the second guest virtual machine 540.

Meanwhile, the server virtual machine 520 can transmit the encrypted data to the first guest virtual machine 530 based on the second communication scheme, without transmitting the encrypted data to the second guest virtual machine 540. Accordingly, it is possible to increase security during data transmission to virtual machines whose integrity is verified.

In another example, in response to the integrity of the server virtual machine 520, the first guest virtual machine 530, and the second guest virtual machine 540 being verified by the verifier VFR executed in the hypervisor 505, the server virtual machine 520 can transmit a security key to the first guest virtual machine 530 and the second guest virtual machine 540 based on the first communication scheme.

Further, the server virtual machine 520 can transmit the encrypted data to the first guest virtual machine 530 and the second guest virtual machine 540 based on the second communication scheme. Accordingly, it is possible to increase security during data transmission to virtual machines whose integrity is verified.

In the drawing, an example is illustrated in which the policy manager PM in the security executor TEE shares a sharing policy or a topic based on the sharing policy with the respective security interfaces 525, 535, and 545 in the server virtual machine 520 and the first and second guest virtual machines 530 and 540.

Data to be transmitted to the respective security interfaces 525, 535, and 545 in the server virtual machine 520 and the first and second guest virtual machines 530 and 540 can vary depending on the sharing policy or the topic based on the sharing policy.

Meanwhile, the security interface 525 in the server virtual machine 520 can include a security manager TEma for data exchange with the security executor TEE and a routing manager SBa for transmitting the encrypted data.

Similarly, the respective security interfaces 535 and 545 in the first and second guest virtual machines 530 and 540 can include security managers TEmb and TEmc, respectively, for data exchange with the security executor TEE and routing managers SBb and SBc for receiving the encrypted data from the server virtual machine 520.

Meanwhile, in the drawing, ARs can be referred to as the secure world, and Arn can be referred to as the normal world. That is, the security executor TEE is the secure world, and the hypervisor 505 and the respective virtual machines 520, 530, and 540 can be the normal world.

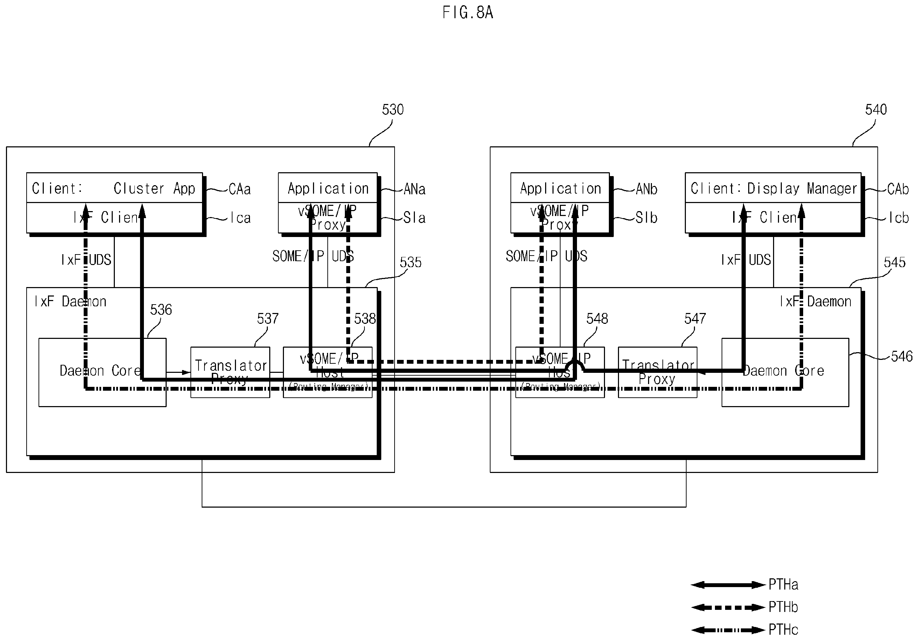

FIGS. 8A to 13B are diagrams referred to in the description of FIG. 7.

First, FIG. 8A is a diagram illustrating an example of a communication path between guest virtual machines.

Referring to the figure, the first guest virtual machine 530 can execute a security interface 535, a first application CAa, and a second application Ana.

The second guest virtual machine 540 can execute a security interface 545, a third application CAb, and a fourth application Anb.

Meanwhile, the first application CAa and the third application CAb can be interface-based applications, and the second application ANa and the fourth application ANb can be SOME/IP-based applications.

In response thereto, the first application CAa and the third application CAb can be executed on interface clients Ica and Icb, and the second application ANa and the fourth application ANb can be executed on SOME/IP proxies SIa and SIb.

Meanwhile, the security interface 535 in the first guest virtual machine 530 can execute daemon core 536, translator proxy 537, and routing manager 538.

Meanwhile, the security interface 545 in the second guest virtual machine 540 can execute daemon core 546, translator proxy 547, and routing manager 548.

Referring to the figure, the first application CAa and the third application CAb can exchange data along a path Pathc based on an interface communication scheme which is the first communication scheme.

In the drawing, an example is illustrated in which the path Pathc passes through the daemon core 536, the translator proxy 537, and the routing manager 538 in the first guest virtual machine 530 and the routing manager 548, the translator proxy 547, and the daemon core 546 in the second guest virtual machine 540.

Meanwhile, the second application ANa and the fourth application ANb can exchange data along a path Patha based on a SOME/IP communication scheme which is the second communication scheme.

In the drawing, an example is illustrated in which the path Patha passes through the routing manager 538 in the first guest virtual machine 530 and the routing manager 548 in the second guest virtual machine 540.

Meanwhile, communication between the first application CAa and the fourth application ANb or communication between the second application ANa and the third application CAb can take place along a path Pathb.

Meanwhile, the first guest virtual machine 530 and the second guest virtual machine 540 can be virtual machines based on different operating systems.

For example, the first guest virtual machine 530 can be a virtual machine based on the QNX operating system, and the second guest virtual machine 540 can be a virtual machine based on the Linux operating system.

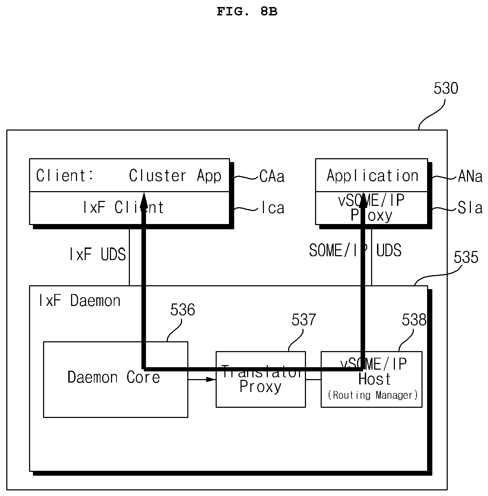

FIG. 8B is a diagram illustrating an example of a communication scheme in the first guest virtual machine.

Referring to the figure, the first application CAa executed in the first guest virtual machine 530 can transmit data to the second application ANa through the daemon core 536, the translator proxy 537, and the routing manager 538.

In this case, the first application CAa can be an interface-based application, and the second application ANa can be a SOME/IP-based application.

In response thereto, the first application CAa can be executed on the interface clients Ica and Icb, and the second application ANa can be executed on the SOME/IP proxies SIa and SIb.

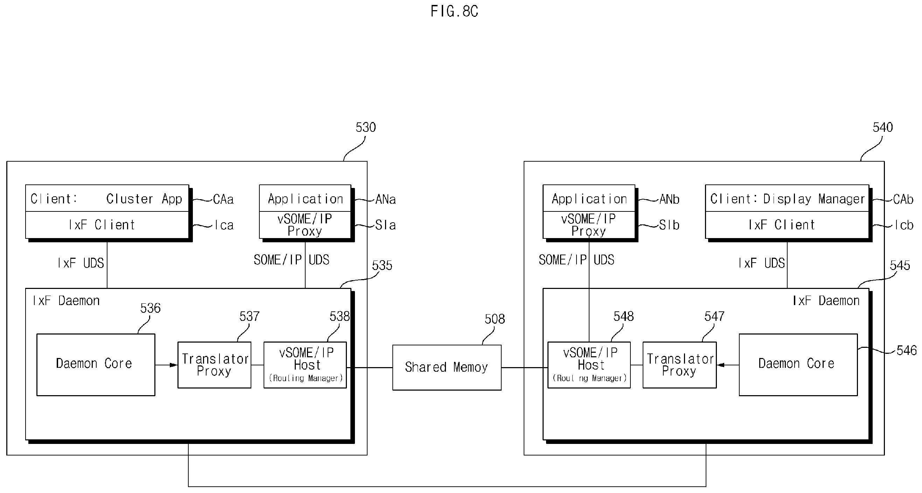

FIG. 8C is a diagram illustrating another example of a communication path between the guest virtual machines.

Referring to the figure, the internal configuration of each of the first guest virtual machine 530 and the second guest virtual machine 540 is the same as FIG. 8A, with a difference being that the shared memory 508 is located between the first guest virtual machine 530 and the second guest virtual machine 540.

That is, the shared memory 508 can be used during data transmission between the first guest virtual machine 530 and the second guest virtual machine 540.

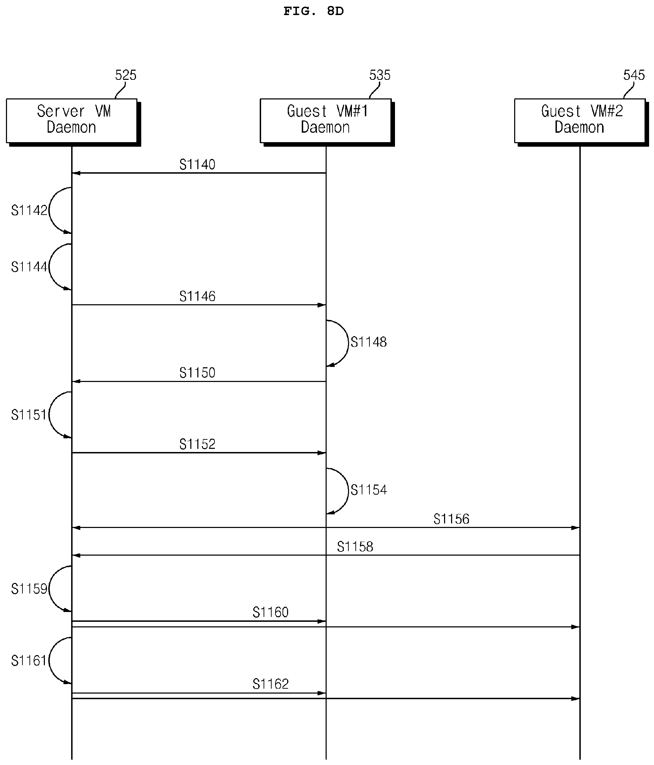

FIG. 8D is a diagram explaining an example of sharing data based on sharing of a symmetric key.

Referring to the figure, the security interface 535 in the first guest virtual machine 530 transmits a request for authentication to the security interface 525 in the server virtual machine 520 based on a first communication scheme (S1140).

Then, the security interface 525 in the server virtual machine 520 verifies certificate validity of the security interface 535 in the first guest virtual machine 530 that has requested authentication (S1142).

Then, the security interface 525 in the server virtual machine 520 encrypts a symmetric key, to be used for sending and receiving encrypted data, with a public key of the security interface 535 in the first guest virtual machine 530 which is a counterpart virtual machine (S1144).

Subsequently, the security interface 525 in the server virtual machine 520 transmits the encrypted symmetric key to the security interface 535 in the first guest virtual machine 530 based on the first communication scheme (S1146).

Next, the security interface 535 in the first guest virtual machine 530 decrypts the symmetric key with its private key to obtain the symmetric key (S1148).

Then, the security interface 535 in the first guest virtual machine 530 transmits a request for data subscription to the security interface 525 in the server virtual machine 520 (S1150).

In response thereto, the security interface 525 in the server virtual machine 520 encrypts the data with the symmetric key (S1151), and transmits the encrypted data to the security interface 535 in the first guest virtual machine 520 based on a second communication scheme (S1152).

Subsequently, the security interface 535 in the first guest virtual machine 530 decrypts the encrypted data with the symmetric key (S1154).

Meanwhile, the security interface 545 in the second guest virtual machine 540 and the security interface 525 in the server virtual machine 520 can request mutual authentication (S1156).

Meanwhile, the security interface 545 in the second guest virtual machine 540 transmits a request for data subscription to the security interface 525 in the server virtual machine 520 (S1158).

In response thereto, the security interface 525 in the server virtual machine 520 encrypts the data with the symmetric key (S1159), and transmits the encrypted data to the security interface 535 in the first guest virtual machine 530 and the security interface 545 in the second guest virtual machine 540 based on the second communication scheme (S1160).

Meanwhile, the security interface 525 in the server virtual machine 520 can generate new symmetric keys as random key values at predetermined intervals.

That is, the security interface 525 in the server virtual machine 520 can update the symmetric key.

Then, the security interface 525 in the server virtual machine 520 transmits the encrypted and updated symmetric key to the security interface 535 in the first guest virtual machine 530 and the security interface 545 in the second guest virtual machine 540 (S1162).

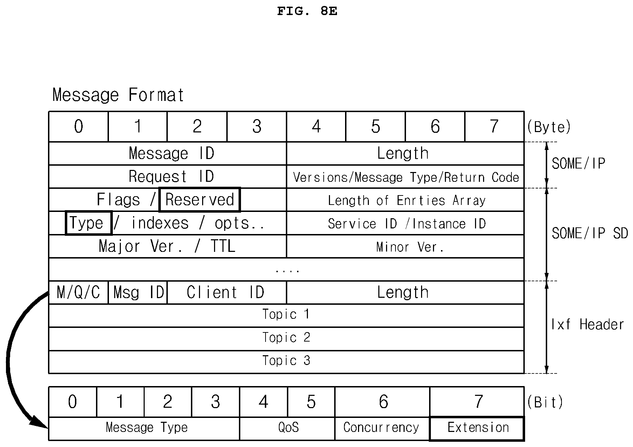

FIG. 8E is a diagram illustrating the format of a message, such as an authentication request or a subscription request of FIG. 8D.

Referring to the figure, the message, such as the authentication request or the subscription request, can include a message ID, a request ID, flag information, reserved information, type information, M/Q/C information in the interface header, and the like.

Meanwhile, the M/Q/C information in the interface header and the like can include an extension bit.

For example, the reserved information of [0x00] indicates Find Server VM, the reserved information of [0x01] indicates Offer Server VM, the reserved information of [0x02] indicates Request capability, and the reserved information of [0x03] indicates Request capability ACK.

Meanwhile, the type information of [0x00] indicates Find Service, the type information of [0x01] indicates Offer Service, the type information of [0x02] indicates Request Service, the type information of [0x03] indicates Request Service ACK, the type information of [0x04] indicates Find EVENT group, the type information of [0x05] indicates Publish Event group, the type information of [0x06] indicates Subscribe Event group, and the type information of [0x07] indicates Subscribe Event group ACK.

Meanwhile, the extension bit of [0x00] indicates only IxF, and the extension bit of [0x01] indicates IxF with SOME/IP.

Meanwhile, the server virtual machine 520 can perform control so that data, shared between the first guest virtual machine 530 and the second guest virtual machine 540, can vary depending on a sharing policy. Accordingly, based on the sharing policy, it is possible to differentiate data to be transmitted.

Meanwhile, in response to the sharing policy being updated, the server virtual machine 520 can set data shared between the first guest virtual machine 530 and the second guest virtual machine 540. Accordingly, data to be transmitted can be set up based on the updating of the sharing policy.

Meanwhile, the server virtual machine 520 can receive position information data, camera data, or sensing data, and can be configured to transmit the position information data to the first guest virtual machine 530 and not be transmitted to the second guest virtual machine 540, based on the shared memory 508 based on the sharing policy. Accordingly, based on the sharing policy, it is possible to differentiate data to be transmitted.

Meanwhile, in response to the sharing policy being updated, the server virtual machine 520 can be configured to transmit the position information data to the first guest virtual machine 530 and the second guest virtual machine 540 based on the shared memory 508. Accordingly, data to be transmitted can be set up based on the updating of the sharing policy.

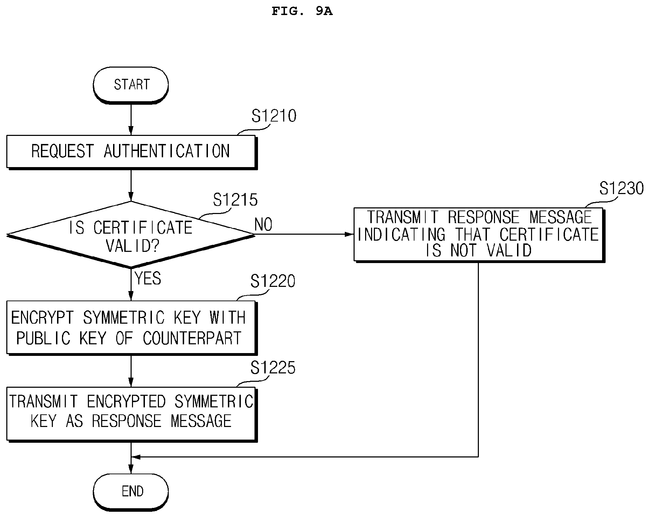

FIG. 9A is a diagram explaining an example of sharing a symmetric key.

Referring to the figure, the security interface 535 in the first guest virtual machine 530 or the security interface 545 in the second guest virtual machine 540 transmits a request for authentication to the security interface 525 in the server virtual machine 520 (S1210).

In response thereto, the sever virtual machine 520 verifies certificate validity (S1215).

If the certificate is valid, the server virtual machine 520 encrypts a symmetric key, to be used for sending and receiving encrypted data, with a public key of a counterpart (S1220).

Then, the server virtual machine 520 can transmit, as a response message, a security key including the encrypted symmetric key to the first guest virtual machine 530 or the second guest virtual machine 540 based on the first communication scheme (S1225).

Meanwhile, if the certificate is not valid in operation 1215 (S1215), the server virtual machine 520 can transmit a response message indicating that the certificate of the first guest virtual machine 530 or the second guest virtual machine 540 is not valid (S1283).

That is, in FIG. 9A, in response to receiving the request for authentication from the first guest virtual machine 530, the server virtual machine 520 can encrypt the security key based on the public key received from the first guest virtual machine 530, and can transmit the encrypted security key to the first guest virtual machine 530 based on the first communication scheme or the second communication scheme. Accordingly, it is possible to increase security during data transmission.

Meanwhile, in response to receiving the request for authentication from the first guest virtual machine 530, if the certificate is valid, the server virtual machine 520 can encrypt the security key based on the public key received from the first guest virtual machine 530, and can transmit the encrypted security key to the first guest virtual machine 530 based on the first communication scheme or the second communication scheme. Accordingly, it is possible to increase security during data transmission.

Meanwhile, in response to receiving the request for authentication from the first guest virtual machine 530, if the certificate is not valid, the server virtual machine 520 can transmit a response message, indicating that the certificate is not valid, to the first guest virtual machine 530 based on the first communication scheme or the second communication scheme. Accordingly, it is possible to increase security during data transmission.

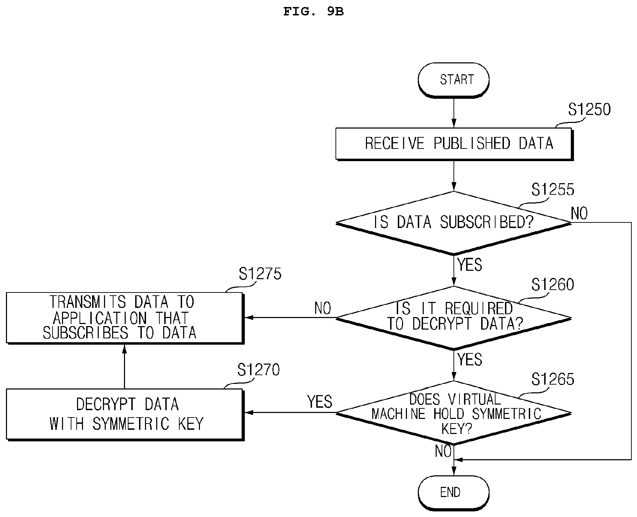

FIG. 9B is a diagram explaining an example of sharing data using a symmetric key.

Referring to the figure, the first guest virtual machine 530 or the second guest virtual machine 540 receives data published by the server virtual machine 520 and the like (S1250).

The first guest virtual machine 530 or the second guest virtual machine 540 checks whether a corresponding topic is subscribed to (S1255), and if so, checks whether the received data is important information (S1260), and if so, checks whether the first guest virtual machine 530 or the second guest virtual machine 540 holds a symmetric key (S1265), and if so, decrypts the received data with the symmetric key held by first guest virtual machine 530 or the second guest virtual machine 540 (S1270).

Further, the first guest virtual machine 530 or the second guest virtual machine 540 transmits the decrypted data to an application and the like that subscribe to the data (S1275).

Meanwhile, if the received data does not include important information in operation 1260, the data is not encrypted, such that the data can be directly transmitted to the application and the like that subscribe to the data, without being decrypted.

Meanwhile, in operation 1260 (S1260), it can be determined whether a level of importance is greater than or equal to a predetermined value.

For example, operation 1265 can be performed in response to the level of importance being greater than or equal to a predetermined value, and operation 1275 can be performed in response to the level of importance being lower than the predetermined value.

As described above with reference to FIG. 9B, data can be shared based on the second communication scheme based on the security key including the symmetric key.

Meanwhile, the virtual machines 520, 530, and 540 are required to function normally or partially even when a fault or failure occurs in the security interfaces 525, 535, and 545 in the virtual machines 520, 530, and 540.

When a fault or failure occurs in an application using the interface client and the security interfaces 525, 535, and 545, it is required to provide a method of reducing loss of connection and data.

Meanwhile, the server virtual machine 520 or the first guest virtual machine 530 or the second guest virtual machine 540 can execute a security interface in active mode and a security interface in standby mode.

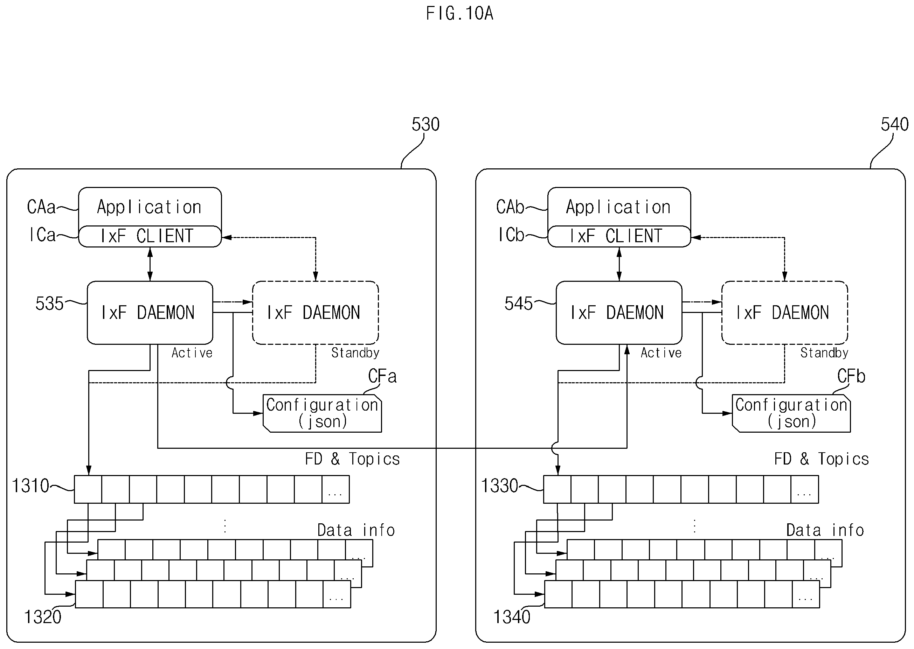

Meanwhile, the security interface in the active mode can be connected to a security interface in active mode of another virtual machine or another signal processing device, and the security interface in standby mode can monitor a queue status, which will be described below with reference to FIGS. 10A to 10C.

FIG. 10A is a diagram referred to in the description of operation of a security interface. Particularly, 10A is a diagram referred to in the description of operation of a security interface of the first guest virtual machine 530 or the second guest virtual machine 540.

Referring to the figure, the first guest virtual machine 530 can execute a security interface 535 in active mode and a security interface in standby mode, and execute an application CAa on an interface client ICa.

Meanwhile, the second guest virtual machine 540 can execute a security interface 545 in active mode and a security interface in standby mode, and execute an application CAb on an interface client ICb.

The security interface 535 in the first guest virtual machine 530 can determine whether to use data information queue 1320 based on the type, topic, or level of importance of data transmitted or received by the application CAa.

Meanwhile, the security interface 535 in the first guest virtual machine 530 can store, in a topic queue 1310, data between the security interfaces or data between the application and the security interface, or a topic subscribed to by the application, etc.

Meanwhile, the security interface 535 in the first guest virtual machine 530 can determine a data recovery argument value based on the level of importance of data subscribed to by the application CAa.

Meanwhile, the security interface 535 in the first guest virtual machine 530 can determine whether to use the data information queue 1320 or perform an update operation, etc., based on the data recovery argument value.

Meanwhile, the server virtual machine 520 can manage the state of the security interface 535 in the active mode and the state of the security interface in the standby mode.

The security interface 545 in the second guest virtual machine 540 can determine whether to use data information queue 1340 based on the type, topic, or level of importance of data transmitted or received by the application CAb.

Meanwhile, the security interface 545 in the second guest virtual machine 540 can store, in a topic queue 1330, data between the security interfaces or data between the application and the security interface, or a topic subscribed to by the application, etc.

Meanwhile, the security interface 545 in the second guest virtual machine 540 can determine a data recovery argument value based on the level of importance of data subscribed to by the application CAb.

Meanwhile, the security interface 545 in the second guest virtual machine 540 can determine whether to use the data information queue 1340 or perform an update operation, etc., based on the data recovery argument value.

Meanwhile, the server virtual machine 520 can manage the state of the security interface 545 in the active mode and the state of the security interface in the standby mode.

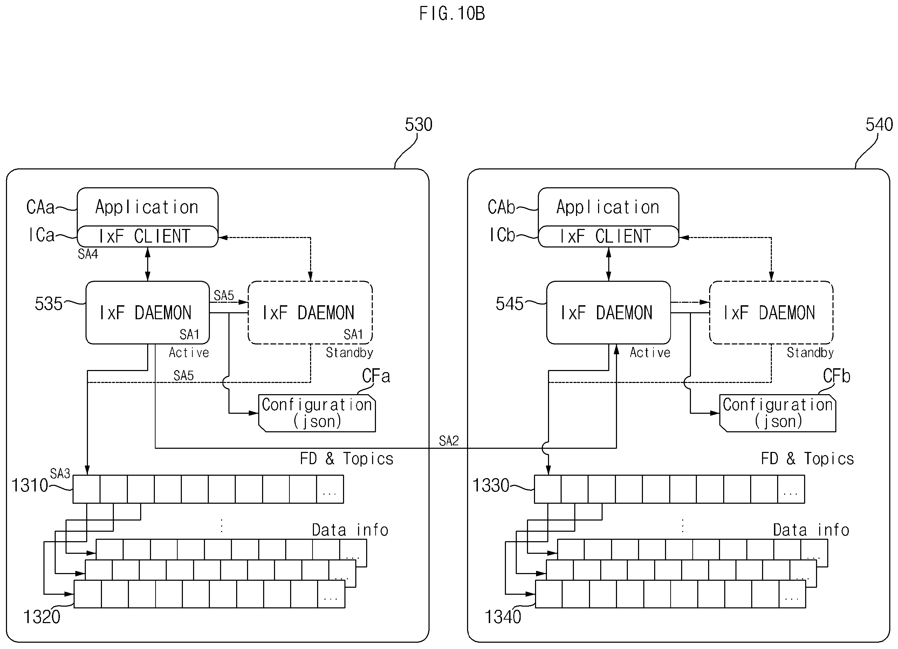

FIG. 10B is a diagram explaining an example of managing connection of a security interface.

Referring to the figure, the first guest virtual machine 530 can execute a security interface 535 in active mode for sending and receiving data, and a security interface in standby mode for use as a replacement when an error, such as a connection failure, occurs (SA1).

Meanwhile, the security interface 535 in the active mode can be connected to the security interface in the active mode in the second guest virtual machine 540 to prepare for transmission or reception of data (SA2).

Then, data information based on connection between the security interfaces is updated in a topic queue 1310, and the security interface in the standby mode monitors the status of the queue (SA3).

Then, when the application CAa is connected to the security interface 535 in the active mode, an interface client ICa collects connection information of the security interface in the active mode and the security interface in the standby mode (SA4).

Then, the connection information is updated in the topic queue 1310.

Next, when an error occurs in the security interface 535 in the active mode during data transmission or reception, the security interface in the standby mode checks the topic queue 1310, and then operates after being activated to the active mode (SA5).

Meanwhile, when a connection error occurs, the state or mode of the security interface is changed according to the sequence of SA1 to SA5, and the security interface operates according to each mode (SA6).

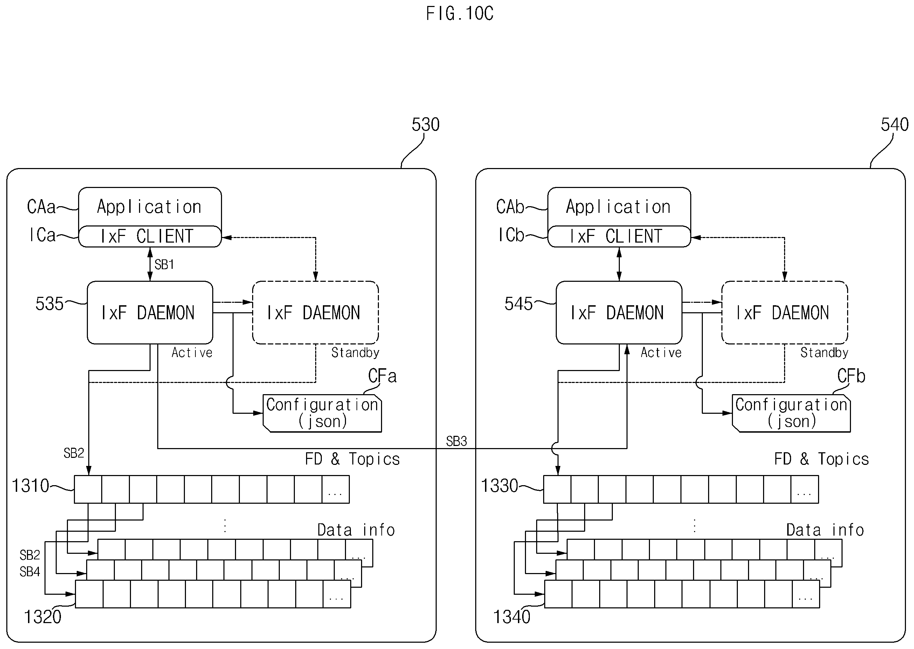

FIG. 10C is a diagram explaining data management of a security interface.

Referring to the figure, when an application CAa in the first guest virtual machine 530 subscribes to data, an on/off value can be transmitted by entering the value in a data recovery argument (SB1).

Then, the security interface 535 in the active mode checks a corresponding topic and the on/off value in the data recovery argument (SB2).

Subsequently, upon checking the value in the data recovery argument, if the value is an ON value, the security interface 535 in the active mode stores the data in a data information queue 1320.

For example, if a connection failure occurs in the security interface 535, data information is updated after the security interface 535 is restored, such that only information after the recovery time can be transmitted.

Then, after transmitting the data, the security interface 535 returns data reception result of the security interface 545 in the second guest virtual machine 540 (SB3).

Next, upon receiving the reception result, the security interface 535 performs an update operation, such as deleting data from the data information queue 1320 (SB4).

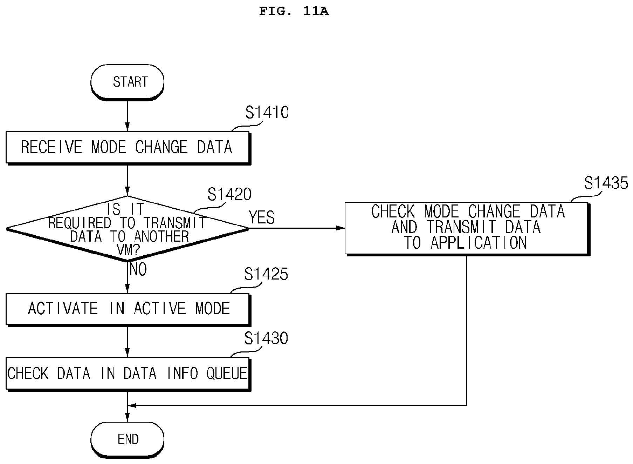

FIG. 11A is a flowchart illustrating a mode change in a virtual machine.

Referring to the figure, the first guest virtual machine 530 or the second guest virtual machine 540 determines whether mode change data is received (S1410).

In this case, the mode change data can be received from the server virtual machine 520.

For example, if the server virtual machine 520 receives an input signal input by a user and the like, the server virtual machine 520 transmits the mode change data to the first guest virtual machine 530 or the second guest virtual machine 540.

For example, if the first display 180 requires a mode change, the server virtual machine 520 can transmit the mode change data to the first guest virtual machine 530.

Then, upon receiving the mode change data, the first guest virtual machine 530 determines whether it is required to transmit the data to another guest virtual machine 540 (S1420), and if it is required to transmit the data, the first guest virtual machine 530 can transmit the mode change data to an application and the like in the second guest virtual machine 540 (S1435).

Meanwhile, if it is not required to transmit the data to another guest virtual machine 540 in operation 1420 (S1420), the first guest virtual machine 530 activates the security interface in the standby mode, of the security interface 535 in the active mode and the security interface in the standby mode (S1425).

Then, the activated security interface can check data in the data information queue 1340 (S1430), and then can perform a mode change based on the checked data.

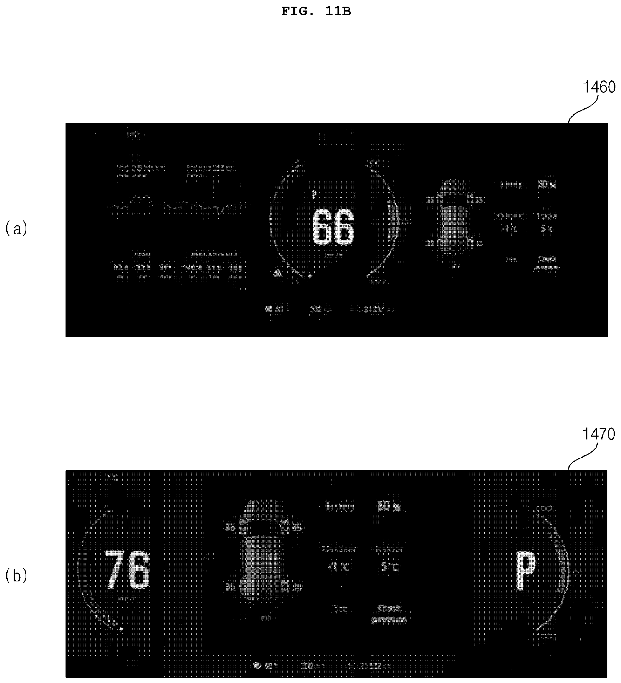

FIG. 11B is a diagram referred to in the description of FIG. 11A.

Referring to the figure, the first guest virtual machine 530 or the second guest virtual machine 540 outputs an image 1460 in a first mode, and then, in response to receiving mode change data, changes a mode and outputs an image 1470 in a second mode. Accordingly, an image corresponding to the mode change can be displayed.

Meanwhile, the first mode can be a class mode, and the second mode can be an enhance mode.

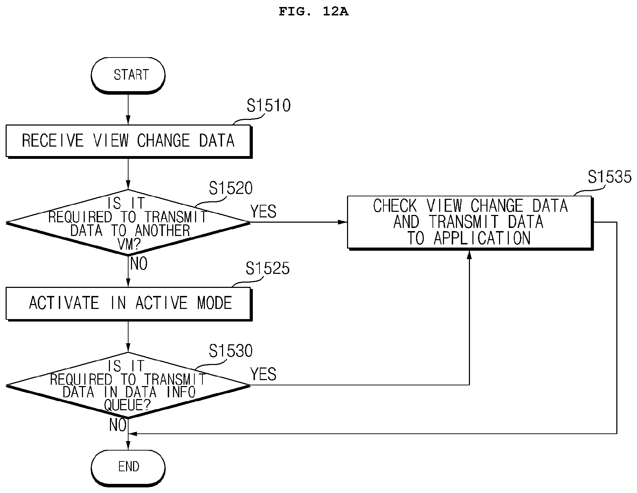

FIG. 12A is a flowchart illustrating a view change in a virtual machine.

Referring to the figure, the first guest virtual machine 530 or the second guest virtual machine 540 determines whether view change data is received (S1510).

In this case, the view change data can be received from the server virtual machine 520.

For example, if the server virtual machine 520 receives an input signal input by a user and the like, the server virtual machine 520 transmits the view change data to the first guest virtual machine 530 or the second guest virtual machine 540.

For example, if the first display 180 requires a view change, the server virtual machine 520 can transmit the view change data to the first guest virtual machine 530.

Then, upon receiving the view change data, the first guest virtual machine 530 determines whether it is required to transmit the data to another guest virtual machine 540 (S1520), and if it is required to transmit the data, the first guest virtual machine 530 can transmit the view change data to an application and the like in the second guest virtual machine 540 (S1535).

Meanwhile, if it is not required to transmit the data to another guest virtual machine 540 in operation 1520 (S1520), the first guest virtual machine 530 activates the security interface in the standby mode, of the security interface 535 in the active mode and the security interface in the standby mode (S1525).

Then, the activated security interface can check data in the data information queue 1340 and check whether it is required to transmit the data (S1530), and if so, can perform a view change.

For example, if a level of importance of the data is greater than or equal to a predetermined value, the activated security interface can perform a view change for the data.

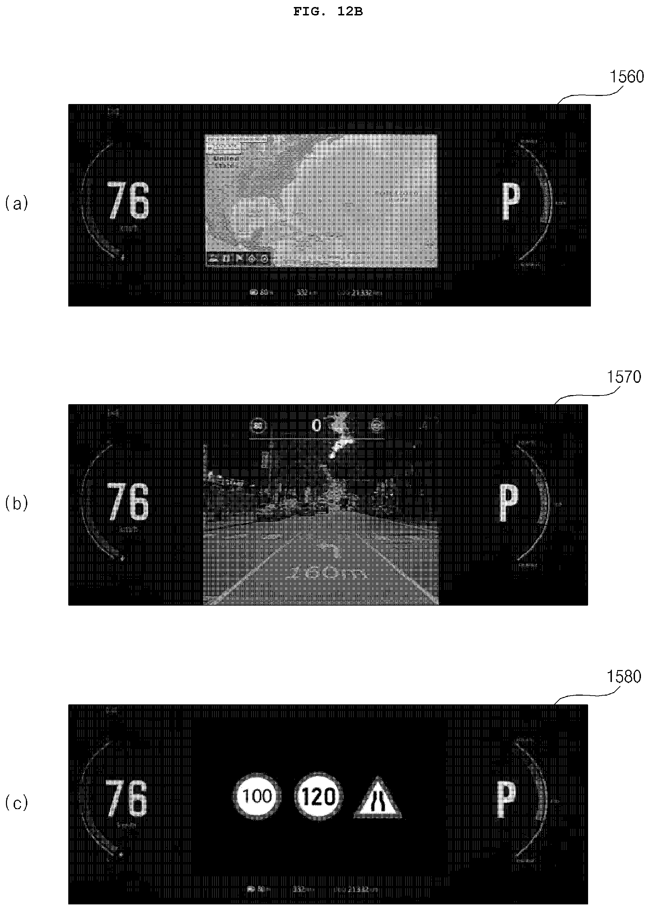

FIG. 12B is a diagram referred to in the description of FIG. 12A.

Referring to the figure, the first guest virtual machine 530 or the second guest virtual machine 540 outputs an image 1560 in a first mode, and then, in response to receiving view change data, the first guest virtual machine 530 or the second guest virtual machine 540 outputs an image 1570 in a second mode.

In this case, the first mode can be a 2D mode, and the second mode can be a 3D mode.

Meanwhile, in response to receiving data having a level of importance greater than or equal to a predetermined value, the first guest virtual machine 530 or the second guest virtual machine 540 can output an image 1580 in a third mode.

That is, in response to receiving data having a level of importance greater than or equal to a predetermined value, the first guest virtual machine 530 or the second guest virtual machine 540 can display important data such as a traffic sign.

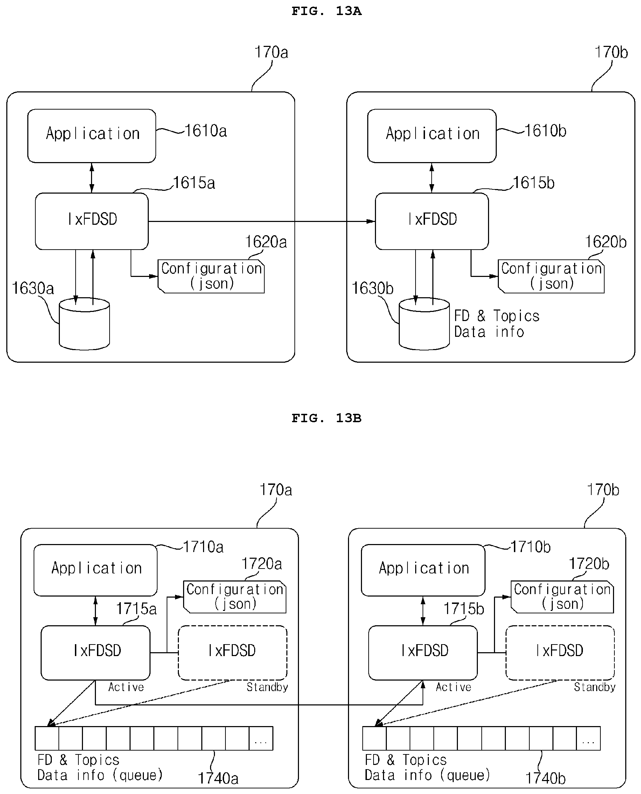

FIG. 13A is a diagram illustrating an example of operation of a security interface of the first signal processing device 170a and a security interface of the second signal processing device 170b.

Referring to the figure, the first signal processing device 170a can execute one security interface 1615a, an application 1610a, a data information queue 1630a, and a configuration file 1620a.

The second signal processing device 170b can execute one security interface 1615b, an application 1610b, a data information queue 1630b, and a configuration file 1620b.

FIG. 13B is a diagram illustrating another example of operation of a security interface of the first signal processing device 170a and a security interface of the second signal processing device 170b.

There is a difference between FIG. 13B and FIG. 13A in that two security interfaces as a duplex structure are executed in FIG. 13B.

Referring to the figure, the first signal processing device 170a can execute a security interface 1715a in active mode, a security interface in standby mode, an application 1710a, a data information queue 1740a, and a configuration file 1720a.

The second signal processing device 170b can execute a security interface 1715b in active mode, a security interface in standby mode, an application 1710b, a data information queue 1740b, and a configuration file 1720b.

It will be apparent that, although the preferred embodiments have been shown and described above, the present disclosure is not limited to the above-described specific embodiments, and various modifications and variations can be made by those skilled in the art without departing from the gist of the appended claims. Thus, it is intended that the modifications and variations should not be understood independently of the technical spirit or prospect of the present disclosure.

## Claims

1. A signal processing device comprising a processor configured to perform signal processing for a display mounted in a vehicle,
wherein the processor is configured to execute a server virtual machine and at least one guest virtual machine on a hypervisor in the processor,
wherein the server virtual machine is configured to transmit a security key to a first guest virtual machine based on a first communication scheme or a second communication scheme different from the first communication scheme, and to transmit data encrypted based on the security key to the first guest virtual machine based on the second communication scheme.

2. The signal processing device of claim 1, wherein the first communication scheme corresponds to interface communication, and the second communication scheme corresponds to Scalable service-Oriented MiddlewarE over IP (SOME/IP) communication.

3. The signal processing device of claim 1, wherein the server virtual machine is configured to transmit the security key to a plurality of guest virtual machines based on the first communication scheme or the second communication scheme, and to transmit the data encrypted based on the security key to the plurality of guest virtual machines based on the second communication scheme.

4. The signal processing device of claim 1, wherein the server virtual machine is configured to transmit data associated with an executed first application to at least one guest virtual machine based on the first communication scheme, and to transmit data associated with an executed second application to at least one guest virtual machine based on the second communication scheme.

5. The signal processing device of claim 4, wherein the first guest virtual machine is configured to output a first image corresponding to the data associated with the first application received based on the first communication scheme, and to output, on the first image, a second image corresponding to the data associated with the second application received based on the second communication scheme.

6. The signal processing device of claim 1, wherein the server virtual machine and the guest virtual machine are configured to execute a routing manager for data transmission based on the second communication scheme.

7. The signal processing device of claim 1, wherein in response to receiving a request for authentication from the first guest virtual machine, the server virtual machine is configured to encrypt the security key based on a public key received from the first guest virtual machine, and to transmit the encrypted security key to the first guest virtual machine based on the first communication scheme or the second communication scheme.

8. The signal processing device of claim 1, wherein in response to receiving a request for authentication from the first guest virtual machine and a certificate being valid, the server virtual machine is configured to encrypt the security key based on a public key received from the first guest virtual machine, and to transmit the encrypted security key to the first guest virtual machine based on the first communication scheme or the second communication scheme.

9. The signal processing device of claim 1, wherein in response to receiving a request for authentication from the first guest virtual machine and a certificate being not valid, the server virtual machine is configured to transmit a message, indicating that the certificate is not valid, to the first guest virtual machine based on the first communication scheme or the second communication scheme.

10. The signal processing device of claim 1, wherein the server virtual machine is configured to receive location information data, camera data, or sensing data, and to transmit location information data, camera data, or sensing data which is encrypted based on the security key, to the first guest virtual machine based on the second communication scheme.

11. The signal processing device of claim 1, wherein the server virtual machine or the first guest virtual machine is configured to execute a security interface in active mode and a security interface in standby mode.

12. The signal processing device of claim 11, wherein the security interface in the active mode is connected to a security interface in active mode of another connected virtual machine or another connected signal processing device, and the security interface in the standby mode is configured to monitor a queue status.

13. The signal processing device of claim 1, wherein while outputting an image in a first mode, the first guest virtual machine or the second guest virtual machine is configured to output an image in a second mode in response to receiving mode change data.

14. The signal processing device of claim 1, wherein while outputting an image in a first mode, the first guest virtual machine or the second guest virtual machine is configured to output an image in a second mode in response to receiving view change data, and to output an image in a third mode in response to receiving data having a level of importance greater than or equal to a predetermined value.

15. The signal processing device of claim 1, wherein a first guest virtual machine of the plurality of guest virtual machines is configured to operate for a first display, and a second guest virtual machine of the plurality of guest virtual machines is configured to operate for a second display.

16. The signal processing device of claim 1, further comprising:
a secured storage device configured to store a digital signature and a public key of an external server; and
a security executor configured to receive the encrypted data from the server, to decrypt the encrypted data from the server based on the digital signature and the public key of the server, and to transmit the decrypted data to the server virtual machine or at least one of the plurality of guest virtual machines.

17. A signal processing device comprising a processor configured to perform signal processing for a display mounted in a vehicle,
wherein the processor is configured to execute a server virtual machine and at least one guest virtual machine on a hypervisor in the processor,
wherein the server virtual machine is configured to transmit data associated with a first application to a first guest virtual machine based on a first communication scheme,
wherein the first guest virtual machine is configured to output a first image corresponding to the data associated with the first application received based on the first communication scheme, and to output, on the first image, a second image corresponding to the data associated with the second application received based on the second communication scheme.

18. The signal processing device of claim 17, wherein the first communication scheme corresponds to interface communication, and the second communication scheme corresponds to Scalable service-Oriented MiddlewarE over IP (SOME/IP) communication.

19. A vehicle display apparatus comprising:
a first display;
a second display; and
a signal processing device comprising a processor configured to perform signal processing for the first display and the second display,
wherein the signal processing device comprises the signal processing device of any one of claims 1 to 19.
